# EUROPEAN PATENT APPLICATION

(11) **EP 2 120 188 A1**
(43) Date of publication of application: **18.11.2009**
(21) Application number: 08702882.5
(22) Date of filing: 01.01.2008
(51) Int. Cl.: G06K 19/07, G06K 17/00, H04B 1/59, H04M 1/00, H04Q 7/38

(54) **MEMORY MEDIUM, COMMUNICATION SYSTEM AND CONTROL DEVICE**

(30) Priority: 28.02.2007 JP 2007048289
(71) Applicant: Sony Corporation, Tokyo 108-0075 (JP)
(72) Inventor: KAWAMURA, Hirofumi, Tokyo 108-0075 (JP); FUKUDA, Kunio, Tokyo 108-0075 (JP); OGISO, Takayuki, Tokyo 108-0075 (JP); TERASHIMA, Toru, Tokyo 108-0075 (JP); HIDAKA, Isao, Tokyo 108-0075 (JP); MURAMATSU, Hirotaka, Tokyo 108-0075 (JP)
(74) Representative: Müller - Hoffmann & Partner
(86) International application number: PCT/JP2008/050001
(87) International publication number: WO 2008/105184

(57) **Abstract**

Various services relating to cellular phones are integrally provided on a SIM card at the initiative of carriers.

A wireless communication function via a reflected-wave transmission system is mounted to a SIM card to allow access to a control interface of a SIM card from an external control device via a wireless communication. The SIM card is provided with a credit function for treating electronic money as well as a SIM function for allowing a carrier to treat subscriber information. Furthermore, a high-capacity of memory card function is added to the SIM card to allow access to the control interface of the memory card from a control device via the reflected-wave transmission system.

## Description

### Technical Field

The present invention relates to a storage medium that stores therein subscriber information of a cellular phone and includes a contact connection interface for connection to a cellular phone so that the subscriber information may be controlled from the cellular phone side, and particularly to a storage medium that has SIM card functions defined by GSM (11.11) and ISO/IEC 7816, a control device, and a communication system formed of a storage medium and a control device.

More specifically, the present invention relates to a storage medium that has the same size and terminal shape as those of a SIM card defined by GSM (11.11) and ISO/IEC 7816 and provides plural functions such as functions of a memory card, electronic money, and credit card on a cellular phone, and the invention relates to a control device and a communication system formed of a storage medium and a control device. In particular, the present invention relates to a storage medium that includes a contactless interface besides a contact connection interface for connection to a cellular phone, and of which stored contents relating to provision of services by a memory card, electronic money, and credit card are controlled by an external control device via the contactless interface, and the invention relates to a control device and a communication system formed of a storage medium and a control device.

### Background Art

In recent years, due to the advancement and popularization of techniques of information apparatus and information communication, reorganization of communication carriers, price revision, and diversification of communication services are being promoted. Among the rapidly-advancing telecommunications industry, particularly techniques of mobile communication typified by cellular phones are significantly growing.

In general, a cellular phone is provided with a contact IC card called a subscriber identity module (SIM) in which subscriber information for a carrier (telecommunications company) in a cellular phone network is stored. Furthermore, many of recent cellular phones are equipped with contactless IC card functions for supporting applications such as electronic money. Moreover, many cellular phones have a slot in which a memory card for recording therein images captured by a camera and music data for reproduction is loaded. Background techniques will be described below regarding the respective card functions incorporated in a cellular phone. SIM Card and IC Card

The SIM card is a contact IC card defined by the ISO/IEC 7816 standard, and is used in cellular phones based on the system of GSM (Global System for Mobile Communications), W-CDMA (Wideband-Code Division Multiple Access), or the like. The SIM card is given a unique number referred to as an international mobile subscriber identity (IMSI). The cellular phone can carry out communication by linking the IMSI with its telephone number.

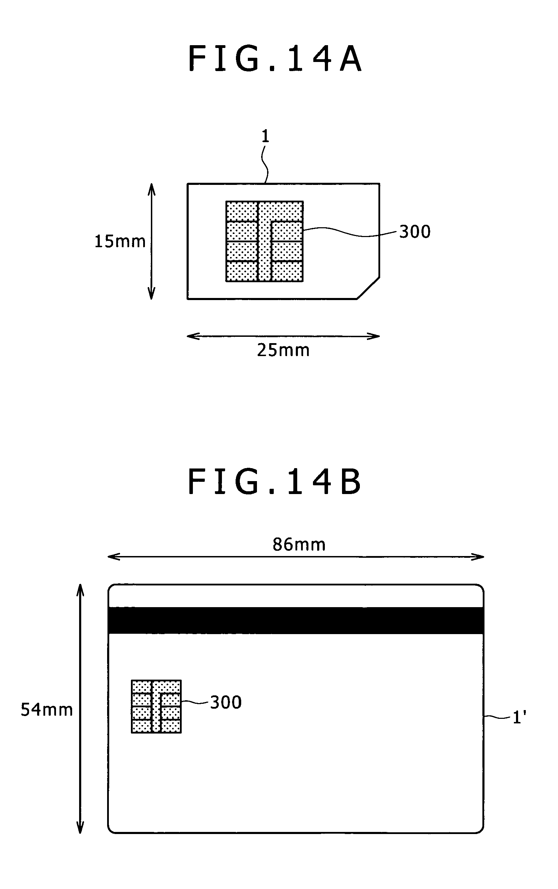

For incorporation in a cellular phone, a SIM card 1 has the specific size and shape (see Fig. 14A). This size (width 15 mm × depth 25 mm × thickness 0.76 mm) is smaller than that of a general contactless IC card 1' (86 mm × 54 mm, see Fig. 14B). Information exchange between a contact IC card and apparatus is carried out via a terminal 300 with a specific shape.

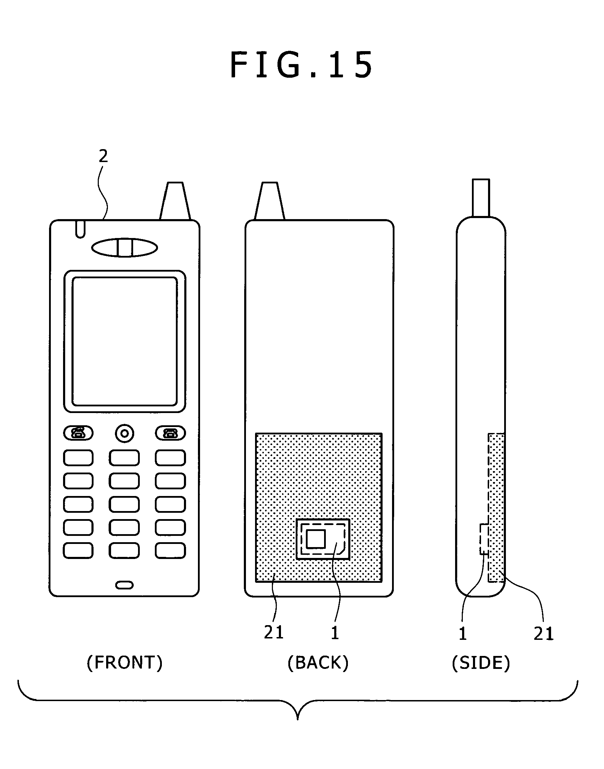

Fig. 15 shows an example in which the SIM card 1 is applied to a cellular phone 2. Because the power supply of the SIM card has to be surely turned off before loading/unloading of the card, many cellular phones have a structure that does not permit loading/unloading of a SIM card unless the battery of the cellular phone is detached and thus the power supply thereof is turned off. In the example of Fig. 15, the SIM card 1 is included behind a battery 21 on the backside of the cellular phone 2.

The loading/unloading of the SIM card in/from a cellular phone allows the telephone number to be transferred to another cellular phone, and permits one cellular phone to use plural telephone numbers through switching. However, basically the SIM card is not designed for frequent loading/unloading. The maximum capacity of the SIM card put into practical use is as low as about 128 MB, which allows storing of the personal information of a contractor and several tens of telephone directory. However, there is a trend to increase the capacity to 1 GB, which allows storing of content information and so on.

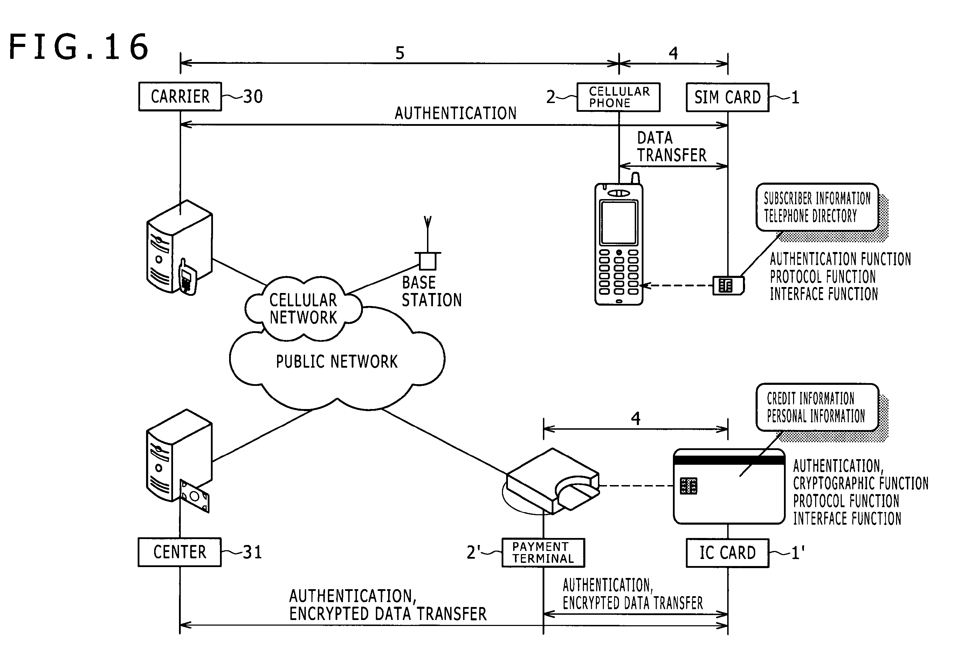

Generally, contact IC cards such as the SIM card are intended to safely record therein the inside information and safely treat the information between the card and apparatus (cellular phone, payment terminal, and so on) and services to which the card is applied. With reference to Fig. 16, the functions of a SIM card and an IC card will be described below.

Subscriber information is safely recorded in the SIM card 1 and is used for authentication with a carrier 30 at the time of connection to a cellular phone network. The SIM card 1 includes a data area in which a telephone directory and so on are stored, which allows recording of and reference to telephone numbers in accordance with user's operation on the cellular phone 2.

On the other hand, the IC card 1' is used as e.g. a cash card, credit card, or electronic money IC card, and carries out not only authentication with a center 31 but also authentication with a payment terminal 2'. Furthermore, the IC card 1' exchanges encrypted important data such as credit information (including electronic money information) and personal information with the payment terminal 2' and the center 31.

In this process, the command/response of the SIM card and the IC card is controlled by the apparatus to which the card is applied. The electric signal terminals, electric specifications, data-transfer control system, and command/response transmission/reception system on an IC card interface 4 are defined as the standard by ISO/IEC 7816. The command/response and the protocol at an upper level are defined on a service-by-service basis. For example, as the global standards, GSM is used for the cellular phone service, and EVM (Europay, MasterCard, Visa) is used for the credit card service.

Therefore, the SIM card and the IC card have a function to hold data and are equipped with an interface function compatible with the ISO 7816 standard in common. Furthermore, the cards each have a protocol function compatible with a corresponding one of services. Depending on the function offered by the protocol, control of authentication, encryption, and so on is carried out.

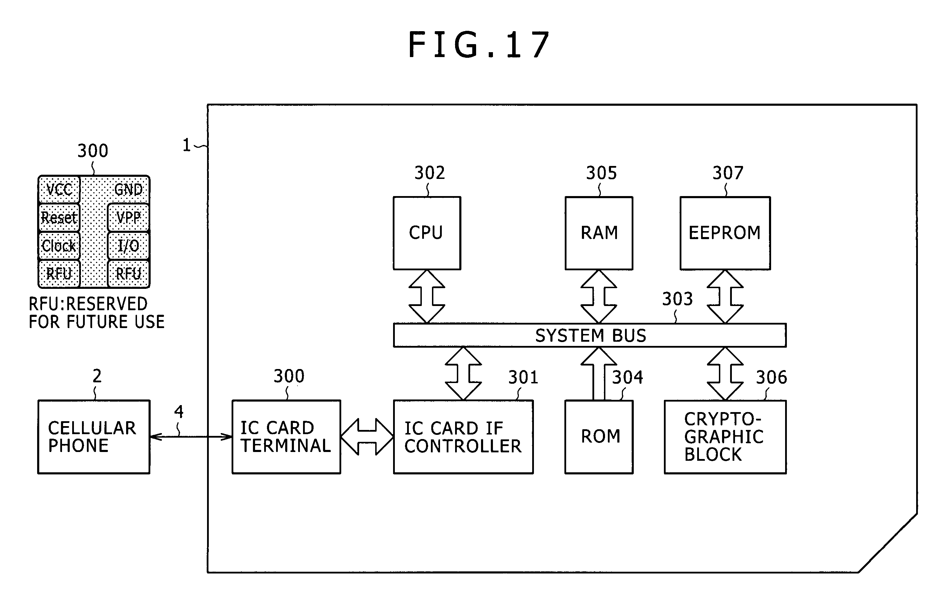

Fig. 17 schematically shows the hardware configuration of the SIM card (IC card).

An IC card terminal 300 is an electric signal terminal applied to the IC card interface 4. Under the standards of ISO/IEC 7816-1 and -2, the respective terminals of power supply (VCC), reset (Reset), clock (Clock), program power supply (VPP), data transfer input/output (I/O), ground (GND), and reserve (RFU) are arranged in the terminal 300 as shown in the drawing.

An IC card interface controller 301 provides an interface function, and controls data transfer between the card 1 and the IC card interface 4 in accordance with the ISO/IEC 7816-3 standard. Furthermore, the controller 301 carries out command reception and response transmission in accordance with the format of ISO/IEC 7816-4 (application protocol data unit (APDU)).

A CPU (Central Processing Unit) 302 is a major controller for controlling the protocol compatible with a service between the card 1 and the cellular phone 2.

A read only memory (ROM) 304 is a memory area in which a program that is to be executed by the CPU 302 is stored in a nonvolatile manner. A random access memory (RAM) 305 is a work memory area used when the CPU 302 executes a program.

A cryptographic block 306 executes data encryption/decryption when the CPU 302 treats encrypted data. A cryptographic algorithm such as data encryption standard (DES), Triple-DES, or advanced encryption standard (AES) is implemented on the cryptographic block 306.

An electrically erasable and programmable ROM (EEPROM) 307 is a nonvolatile memory area for holding data that is to be treated by the card.

The CPU 302 acquires a command from the IC card interface controller 301 via a system bus 303, and carries out predetermined protocol control with access to the cryptographic block 306 and the EEPROM 307 so as to transmit a response to the IC card interface controller 301.

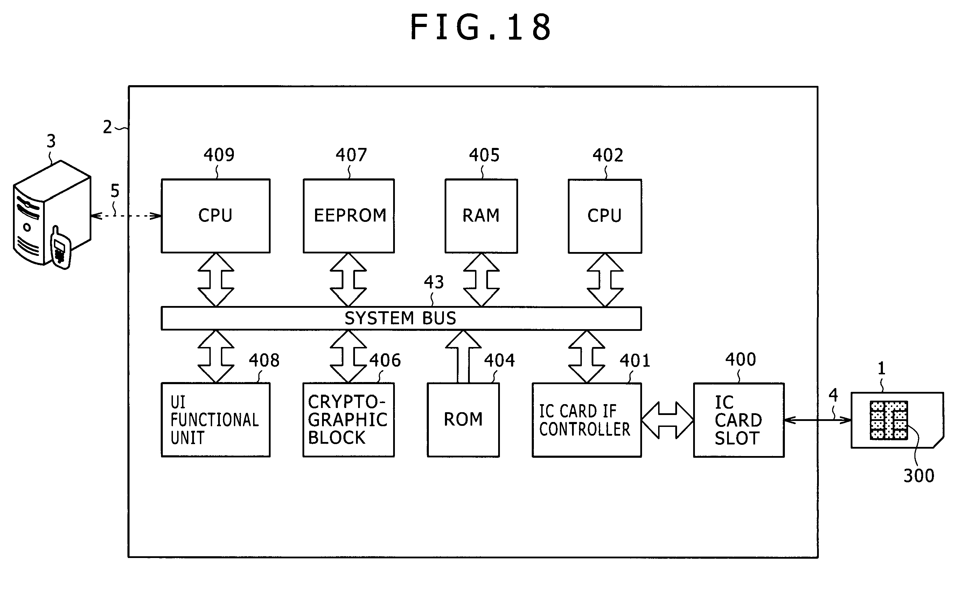

Fig. 18 schematically shows the hardware configuration of the cellular phone terminal 2 in which the SIM card 1 is loaded.

An IC card slot 400 is an insertion port for accepting the SIM card 1, and has contact points corresponding to the respective signal terminals on the IC card terminal 300 of the SIM card 1.

An IC card interface controller 401 is a controller corresponding to the controller 301 in the SIM card 1 loaded in the IC card slot 400, and carries out command transmission and response reception to/from the IC card interface 4.

A CPU 402 controls the protocol with respect to the SIM card 1, and controls a cellular communication functional unit 409 to thereby control the protocol with respect to a carrier 3. Furthermore, the CPU 402 carries out control of application as the cellular phone 2 via a UI (User Interface) functional unit 408.

A ROM 404 is a memory area in which a program that is to be executed by the CPU 402 is stored in a nonvolatile manner. A RAM 405 is a work memory area used when the CPU 402 executes a program. An EEPROM 407 is a nonvolatile memory area for holding data that is to be treated by the card.

A cryptographic block 406 executes data encryption/decryption when the CPU 402 treats encrypted data, and a cryptographic algorithm such as DES, Triple-DES, or AES is implemented on the cryptographic block 406.

The cellular communication functional unit 409 is a wireless communication unit that provides the communication function of the cellular phone. The UI functional unit 408 is a device of an operating system and displaying system for providing a user interface of the cellular phone.

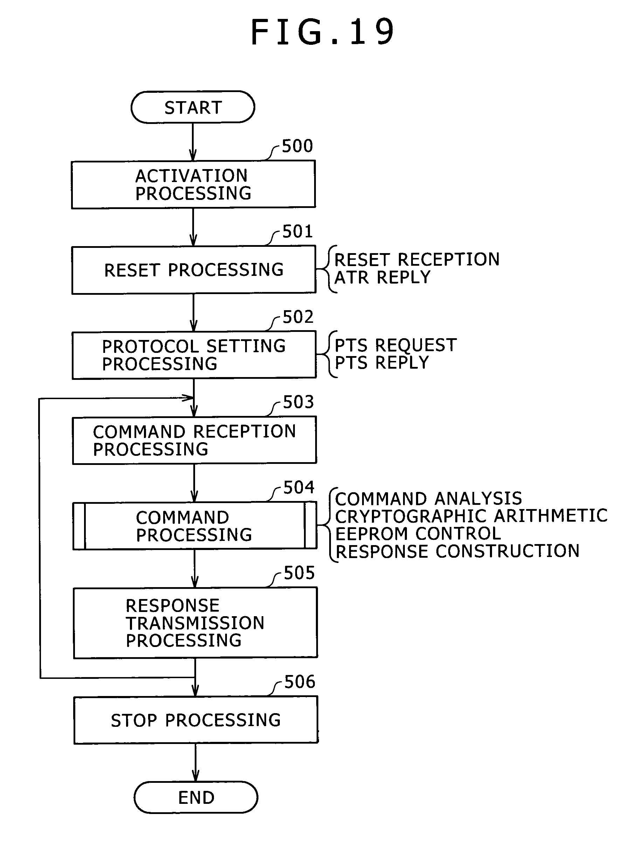

Fig. 19 is a flowchart showing the procedure of interface processing of the SIM card (IC card) based on the standards of ISO/IEC 7816-3 and -4. This processing is executed by the IC card interface controller 301, except for command processing 504.

Activation processing 500 is to allow the cellular phone 2 to activate the SIM card 1. Specifically, the respective terminals of the SIM card 1 are so controlled as to be in the following states: VCC supplied, Clock supplied, VPP stopped, RST = Low, and I/O = reception mode.

Reset processing 501 is to issue a reset to the SIM card 1 after the activation of the cellular phone 2, and acquire interface-ability information referred to as Answer to Reset (ATR). Described in the ability information are the upper limit of the frequency of the clock that can be supplied, the variable clock rate conversion factor (defined as F, D), the transfer protocol system (defined as T = 0, T = 1) for transmission/reception of data (command/response), the supply voltage value of VPP, and so forth. The cellular phone 2 has to carry out interface control in accordance with the ability information in data communication.

Protocol setting (protocol type selection (PTS)) processing 502 is to allow the cellular phone 2 to set the transfer protocol system and the clock rate conversion factor for the SIM card 1. In this processing, the cellular phone 2 issues a PTS request to thereby set the protocol system in the SIM card 1. The SIM card 1 sends back a PTS reply to thereby notify the set protocol system. From then on, data (command/response) communication is carried out under the set transfer protocol and clock rate.

Command reception processing 503 is to allow the SIM card 1 to receive a command transmitted from the cellular phone 2. The received command is sent to the CPU 302.

The command processing 504 is executed by the CPU 302. Specifically, the CPU 302 executes analysis of the received command, arithmetic operation on the cipher corresponding to the command, and EEPROM control, to thereby construct a response.

Response transmission processing 505 is to transmit the response sent from the CPU 302 to the cellular phone 2.

Through repetition of the command reception processing 503, the command processing 504, and the response transmission processing 505, a series of command processing is executed, so that the protocol control corresponding to the service is carried out.

Stop processing 506 is to allow the cellular phone 2 to stop the SIM card 1. Specifically, the respective terminals of the SIM card 1 are so controlled as to be in the following states: VCC stopped, Clock stopped, VPP stopped, RST = L, and I/O = L.

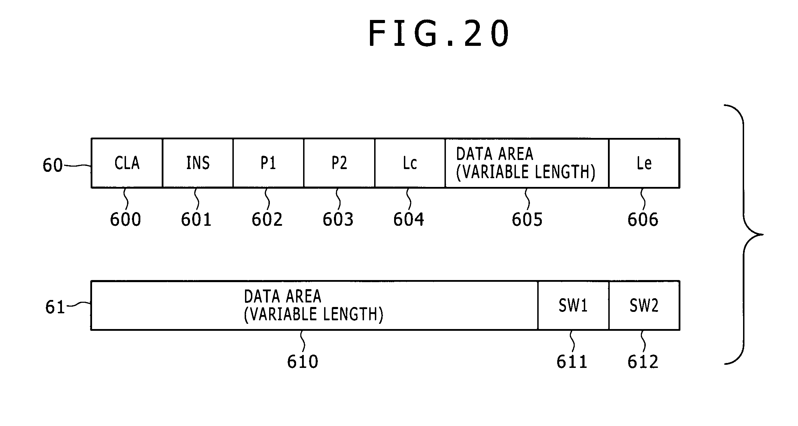

Fig. 20 shows the application protocol data unit (APDU) of command/response applied to the interface of the SIM card (IC card) based on the ISO/IEC 7816-4 standard.

In the command APDU indicated by reference numeral 60, CLA (600) provides class (CLAss) information for identification of the protocol corresponding to the service. INS (601) offers information on the command instruction (INStruction) at the service class. P1 (602) and P2 (603) provide information on parameters associated with the command. Lc (604) is given the data length of the subsequent data area (605) of the command. Le (606) is given the expected value of the data length of a data area (610) of a response.

In the response APDU indicated by reference numeral 61, SW1 (611) and SW2 (612) subsequent to the data area (610) indicate the end of the response, and indicate the processing status in some cases depending on their values.

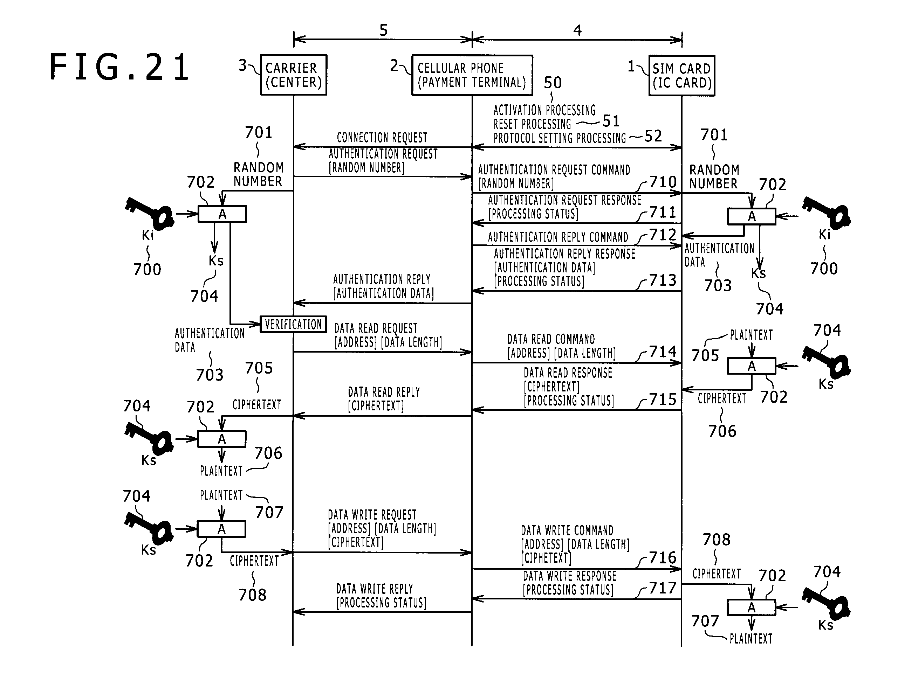

Fig. 21 simply shows an example of the sequence of control of the protocol of authentication and encryption with use of the SIM card and the IC card.

In the sequence in Fig. 21, the SIM card 1 and the carrier (center) 3 hold a common secret key Ki (700) for execution of verification. Specifically, in order to prevent the common secret key Ki (700) from being leaked to the transmission path (the IC card interface 4 or the communication network 5), a random number (701) produced by the carrier 3 and the common secret key Ki (700) are input to a common cryptographic algorithm A (702), and the resultant authentication data (703) is utilized for the verification. Furthermore, after authentication, data is transmitted after being encrypted with a session key Ks (704) obtained together with the authentication data (703), so that the transmitted data is decrypted on the counterpart side.

Via the IC card interface 4, the activation processing 500, the reset processing 501, and the protocol setting processing 502 shown in Fig. 19 are executed at the time of activation of the cellular phone 2. From then on, the commands/responses specified for the service are transmitted/received based on the APDU shown in Fig. 20. The class information CLS (600) in the command APDU is given a common value for providing the service.

The details of the respective commands/responses and the operation sequence will be described below with reference to Fig. 21.

The INS (601) in an authentication request command (710) is given the value indicating "authentication request." The random number (701) is specified in the data area (605) of the command APDU, and the data length thereof is specified in the Lc (604).

The SIM card 1 receives the authentication request command (710), and starts arithmetic operation on the authentication data (703) and the session key Ks (704). In addition, the SIM card 1 transmits an authentication request response (711). In the SW1 and SW2 in the response APDU, the processing status indicating the normal start of the processing is set.

The cellular phone 2 issues an authentication reply command (712) to the SIM card 1 in order to acquire the authentication data (703). The value indicating "authentication reply" is specified in the INS (601) in the command APDU, and the data length of the authentication data (703) is specified in the Lc (604).

The SIM card 1 adds the authentication data (703) obtained as an arithmetic result to the data area (610) of a response APDU, and transmits an authentication reply response (713). At this time, the processing status is set in the SW1 and SW2 in the response APDU.

For data-read from the SIM card 1, the cellular phone 2 adds to a data read command (714) the address corresponding to a data read request by the carrier 3 and a data length, and transmits the command to the SIM card 1. In the command APDU, the value indicating "data read" is set in the INS (601), and the address value is set in the P1 (602) and the P2 (603). Furthermore, the data length is set in the Lc (604).

Upon receiving the data read command (714), the SIM card 1 reads a plaintext data (705) from the address specified by the command and encrypts the read data by the session key Ks (704). The SIM card 1 adds an obtained ciphertext (706) to the data area (610) in a response APDU and transmits a data read response (715). The ciphertext (706) is decrypted to the plaintext (705) in the carrier 3.

For data-write to the SIM card 1, the cellular phone 2 adds to a data write command (716) the address corresponding to a data write request by the carrier, a data length, and a ciphertext (708) arising from encryption in the carrier 3, and transmits the command to the SIM card 1. In the command APDU, the value indicating "data write" is set in the INS (601), and the address value is set in the P1 (602) and the P2 (603). Furthermore, the data length of the ciphertext (708) is set in the Lc (604), and the ciphertext (708) is set in the data area (605).

Upon receiving the data write command (716), the SIM card 1 decrypts the ciphertext (708) set in the data area to a plaintext (707), and writes the plaintext to the specified address. The SIM card 1 adds the processing result to the SW1 and SW2 in a response APDU, and transmits a data write response (717).

Note that the communication system on the communication network (public network, cellular network) side has no direct relation to the gist of the present invention and hence the description thereof is omitted.

### Memory Card

A memory card is a card-type storage device that includes a high-capacity flash memory as a recording medium. There are various standards of the memory card, such as Memory Stick, Secure Digital (SD) card, MultiMedia Card (MMC), Compact Flash (registered trademark), and Universal Serial Bus (USB) memory. Furthermore, there is also a memory card on which a copyright management technique is implemented in consideration of recording of media content such as music and video associated with copyrights.

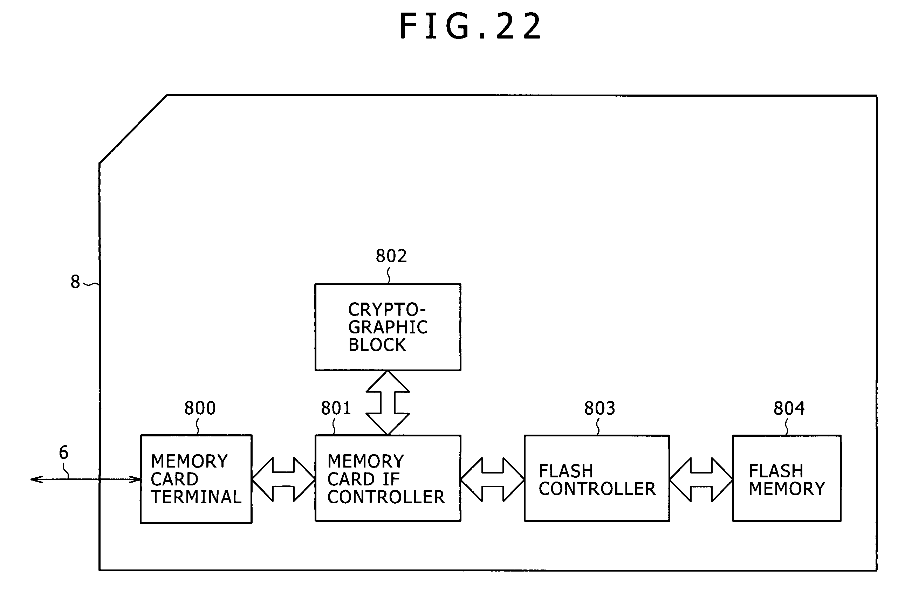

Fig. 22 schematically shows the hardware configuration of a memory card.

A memory card interface 6 is used for control of a memory card 7 from external apparatus and is defined for each memory card standard. In general, physical specifications for prescribing an electric signal and transmission system and logical specifications of the memory card for command control from external apparatus are defined. For the command control, a command system for read or write of memory data is defined. In addition, if a copyright management technique is implemented, a command system for authentication with external apparatus and data encryption is defined.

A memory card terminal 800 functions to transmit an electric signal in accordance with the memory card standard.

A memory card interface controller 801 executes command processing with external apparatus in accordance with the regulation by the physical specifications and logical specifications of the memory card interface 6. In association with the command processing, the controller 801 exchanges control information and memory data added to a command with a flash controller 803. Furthermore, for command processing relating to copyright management, the controller 801 controls a cryptographic block 802 for execution of arithmetic operation on authentication information and encryption/decryption of memory data.

The flash controller 803 reads/writes memory data from/to a flash memory 804 in accordance with control information.

### Memory Card Provided with Both SIM Function and High-Capacity Memory Function

For various applications in which both a nonvolatile memory card and a SIM card are utilized, it is convenient that a SIM integrated circuit chip is incorporated in the memory card. For example, a proposal has been made about a card that conforms to either the MMC card standard or SD card standard (for example, refer to as Patent Document 1). This card is so physically changed as to have the same shape and pin positions as those specified by either the MMC card standard or SD card standard, and is so modified as to encompass a card that conforms to the ISO/IEC 7816 standard and the circuit arrangement of a card that conforms to the ISO/IEC 7816 standard.

In addition, another proposal has been made also about a composite memory card obtained by combining the SIM function with a nonvolatile flash memory that conforms to the MMC or SD card standard and a controller of the memory (for example, refer to as Patent Document 2). The physical format of this composite card is one of the formats of a plug-in SIM card, MMC card, and SD card. In one representative form, the plug-in SIM card format is used, and several external electric contacts are added to those of the plug-in SIM standard in such a way that the contacts can be required for the operation of the memory that conforms to either the MMC standard or SD standard.

Moreover, a memory card has also been brought into existence that has a SIM card shape and is equipped with the functions of both a SIM card and high-capacity nonvolatile memory (for example, refer to as Non-Patent Document 1). This memory card has electric contacts of the SIM card and electric contacts for access to the nonvolatile memory (e.g., MMC, USB) independently of each other. Furthermore, subscriber information used in a cellular phone and various kinds of media content are managed in one memory card. For data stored in the nonvolatile memory function, a function for copyright management is provided. When a cellular phone terminal is changed, the user of the cellular phone can shift not only the subscriber information but also media content simultaneously by moving the card to the new terminal. Furthermore, a carrier can safely manage media content that is to be provided to a user through its content service together with subscriber information in the same card. Moreover, a cellular phone does not need to have a memory card slot.

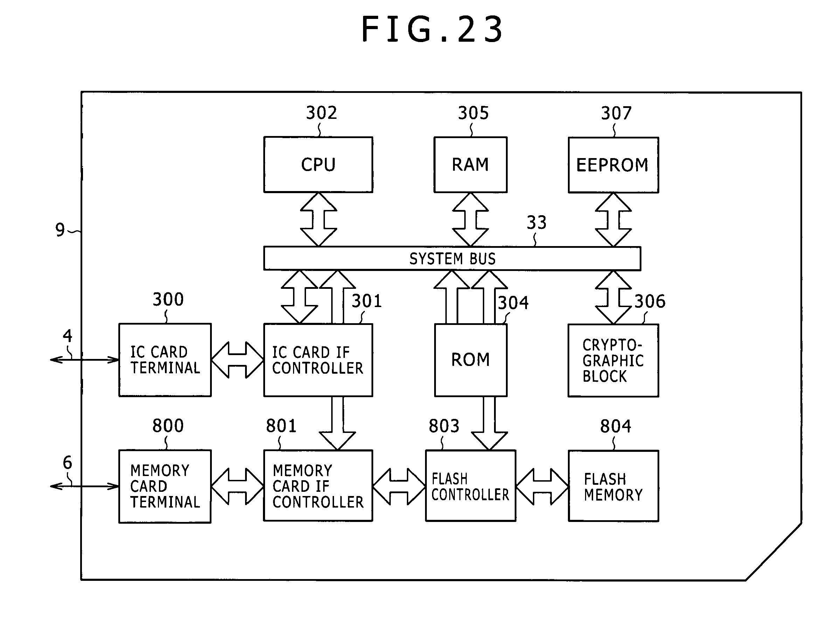

Fig. 23 schematically shows a hardware configuration example of a card obtained by incorporating a SIM card and a memory card in a one-shape body. Basically this card is formed by combining the functional blocks of the SIM card shown in Fig. 17 with the functional blocks of the memory card shown in Fig. 22. The configuration and operation of the respective functional blocks are as described above. The cryptographic block 306 is shared by the SIM card and the memory card.

### Contactless IC Card Technique

A contactless IC card is obtained by substituting a wireless interface for an IC card interface for connection of a contact IC card to external apparatus. For the operation of the contactless IC card, power is supplied to the IC card by utilizing electromagnetic induction due to a transmission carrier from a reader/writer, so that communication between the reader/writer and the card is carried out through modulation of the carrier. Contactless IC card techniques are used for electronic money such as "Edy," rail passes such as "Suica," employee ID cards, etc.

As one of systems based on the contactless IC card techniques, "FeliCa (registered trademark)" is widely known. For FeliCa, an electromagnetic induction system employing a 13.56-MHz frequency band is used. Modulation is carried out based on ASK 10% and Manchester code is employed. The maximum communication rate is 212 kbps.

The communication range of the contactless IC card based on the electromagnetic induction system depends on the antenna of the card. For example, when an IC card with a general size (86 mm × 54 mm) is equipped with a coil antenna having the length equivalent to that of the entire outer circumference of the IC card, the communication range of the card is in the range of several centimeters to about 10 cm.

In Japan, cellular phones are also provided with contactless IC card techniques. For example, when a cellular phone is equipped with the IC chip for Mobile FeliCa developed by FeliCa Networks, Inc., the above-mentioned Edy and Suica (Mobile Suica) can be used even on the cellular phone: deposits/withdrawals via contactless transmission and deposits (charge) via a cellular network are possible. Also in this case, the communication range depends on the antenna, and the cellular phone is equipped with a coil antenna having the length equivalent to that of the entire outer circumference of the cellular phone.

Patent Document 1: JP-T-2004-506266
Patent Document 2: JP-T-2006-523889
Non-Patent Document 1: http://www.spansion.com/jp/flash_memory_products/mirrorbit_hd_si m.html (as of February 22nd, 2007)

### Disclosure of Invention

### Technical Problems

Currently, the functions of a SIM card, memory card, and contactless IC card are each applied to cellular phones as an individual medium, and are utilized for services of carriers. The SIM card allows telephone calls and an information provision service such as "i-mode (registered trademark)." In addition, services of treating media content (e.g., music downloading or the like) can be offered by using the memory card as a medium. Moreover, services of electronic money and rail passes can be utilized by using contactless IC card techniques.

Such use modes of cellular phones (having excellent flexibility of service provision) apply to services in Japan particularly. This is due to the business model in Japan, in which the flexibility of the carrier side is high. Specifically, in Japan, various kinds of services relating to cellular phones are integrally provided at the initiative of carriers, and the specifications of cellular phone terminals that are developed and manufactured by manufacturers are also designed at the initiative of carriers basically.

On the other hand, countries having a major cellular phone market other than Japan, such as the U.S., Europe, and China, generally have a business model in which carriers merely supply a user with a SIM card in which subscriber information is stored. In these countries, manufacturers independently develop cellular phone terminals. Therefore, as it stands, the flexibility of service provision by carriers is lower in foreign countries compared with in Japan. Although careers plan utilization of the above-described electronic money service by a cellular phone, the service will not be realized as planned unless the manufacturer side agrees with the plan and equips terminals with a contactless communication function.

The present inventors consider that it is preferable that SIM cards supplied to users by carriers be provided with various functions as one of methods for allowing the carriers to secure the flexibility of provision of services realized by a cellular phone also in countries other than Japan.

Using an electromagnetic induction system as a contactless communication technique involves a problem that the communication range depends on the antenna and is not sufficiently long. For example, in FeliCa employing a 13.56-MHz body, the communication range is in the range of several centimeters to about 10 cm as described above.

A discussion will be made below about the case in which a SIM card is provided with a contactless IC card technique.

In this case, because the power supply of the SIM card has to be surely turned off before loading/unloading of the card, a structure is basically employed in which the SIM card is provided behind the battery on the backside of the cellular phone and thus the SIM card can not be loaded/unloaded unless the battery is detached to turn off the power supply of the cellular phone (see Fig. 15). However, such a structure involves another problem that electric waves are blocked by the battery, in addition to the problem that the communication range of the contactless IC card is originally short.

Furthermore, it is difficult to mount a coil antenna for a contactless IC card on a SIM card, which has a smaller size compared with the contactless IC card. It would be possible to dispose the coil antenna outside the SIM card. However, in this case, there is a need to route this external antenna inside a cellular phone terminal. Therefore, eventually, the situation in which the plan is not realized unless the approval of terminal manufacturers is obtained remains. That is, carriers can not secure the flexibility of service provision.

As described above, in Japan, manufacturers provide cellular phone terminals with contactless IC card techniques such as the FeliCa system at the initiative of carriers. Thus, the service of utilization of electronic money on a cellular phone is realized. Of course, this case also involves a problem that terminals have a large size due to restrictions on the routing of a coil antenna. Moreover, when a terminal is changed, only a SIM card is unloaded from the old cellular phone terminal so as to be moved to the new cellular phone terminal, whereas electronic money information charged on the contactless IC card function is left in the old terminal. That is, there is a problem that the electronic money information can not be moved immediately by a user itself at the time of the terminal change. In terms of the latter problem, if a SIM card is provided with a contactless IC card function, electronic money information can be conveniently moved together with the SIM card by a user itself.

For an application in which both a nonvolatile memory card and a SIM card are utilized, it is convenient that a SIM integrated circuit chip is incorporated in the memory card as described above. Although a technique for incorporating a wireless function in this kind of composite memory card does not exist, the present inventors can readily think of incorporation of the function of a contactless IC card such as the FeliCa for use of the SIM function. However, FeliCa based on an electromagnetic induction system employing a 13.56-MHz frequency band involves a problem that the communication rate is at most 212 kbps and this rate is insufficient to transmit media content recorded in a high-capacity memory card. Of course, it would be possible to apply a known high-speed wireless communication technique such as wireless LAN or Bluetooth communication to the composite memory card. However, this communication technique has a problem that power consumption is too high to incorporate this kind of circuit for wireless communication in cellular phones.

There is an object for the present invention to provide an excellent storage medium that has the same size and terminal shape as those of a SIM card defined by GSM (11.11) and ISO/IEC 7816 and can provide plural functions such as functions of a memory card, electronic money, and credit card on a cellular phone, and to provide a communication system and a control device.

There is another object for the present invention to provide an excellent storage medium that includes a contactless interface besides a contact connection interface for connection to a cellular phone, and of which stored contents relating to provision of services by a memory card, electronic money, and credit card are favorably controlled by an external control device via the contactless interface, and to provide a communication system and a control device.

There is further another object for the present invention to provide an excellent storage medium that is obtained by housing all circuit components relating to a contactless interface, including an antenna, in a SIM card defined by GSM (11.11) and ISO/IEC 7816 and can secure sufficient communication performance of the contactless interface without suffering from interference by a component in a cellular phone terminal even when being loaded in the cellular phone, and to provide a communication system and a control device.

### Technical Solution

According to an embodiment of the present invention, there is provided a communication system including a cellular phone, a storage medium that is used in such a manner as to be loaded in the cellular phone and stores therein at least subscriber information of the cellular phone, and a control device that provides an application function with use of the storage medium. The communication system includes contact connecting means for connecting the storage medium to the cellular phone, and wireless communicating means for connecting the storage medium to an external control device. The cellular phone is allowed to control the subscriber information via the contact connecting means and the control device is allowed to control the subscriber information via the wireless communicating means.

The term "system" refers to an entity arising from logical aggregation of plural devices (or functional modules that realize specified functions), and it does not matter whether or not the respective devices or functional modules are included in a single casing (hereinafter, the same shall apply).

Currently, in Japan, the functions of a SIM card, memory card, and contactless IC card are each applied to cellular phones as an individual medium, and are utilized for services of carriers. However, this feature relies on the business model in Japan, in which various services relating to cellular phones are integrally provided at the initiative of carriers. As it stands, it is difficult for this feature to prevail among many other countries in which carriers merely supply users with SIM cards in which subscriber information is stored and therefore the flexibility of service provision by the carriers is limited.

The present inventors consider that it is preferable that SIM cards supplied to users by carriers be provided with various functions as one of methods for allowing the carriers to secure the flexibility of provision of services realized by a cellular phone also in countries other than Japan. For example, if a SIM card is provided with a contactless IC card function, electronic money information can be conveniently moved together with the SIM card by a user itself at the time of terminal change.

When a SIM card is provided with a contactless IC card technique based on a related-art electromagnetic induction system, the following problems will occur: the communication range depends on the antenna and is not sufficiently long; electric waves are easily interfered by other components such as a battery in the terminal; and it is difficult to design the SIM card and the terminal main body due to restrictions on routing of a coil antenna.

In contrast, according to an embodiment of the present invention, a storage medium used in such a manner as to be loaded in a cellular phone includes contact connecting means for functioning for connection to the cellular phone, wireless communicating means for functioning for connection to an external control device, and subscriber information storing means for storing therein subscriber information of the cellular phone. The subscriber information storing means is controllable from the cellular phone via the contact connecting means and is controllable from the control device via the wireless communicating means. Basically this storage medium has the same size and terminal shape as those of a SIM card defined by GSM (11.11) and ISO/IEC 7816.

The wireless communicating means includes a reflector that transmits data by a reflected wave arising from modulation processing, and the control device includes a reflected-wave read unit that transmits an unmodulated carrier and reads out data from a modulated reflected wave from the reflector. The wireless interface for connection to the control device employs a reflected-wave transmission system.

That is, the storage medium according to an embodiment of the present invention can be formed as a SIM card provided with a wireless communication function based on the reflected-wave transmission system. This allows access to the control interface of the SIM card from an external control device via wireless communication by the reflected-wave transmission system. When a 2.4-GHz frequency band is utilized for the reflected-wave transmission, the antenna size can be decreased compared with FeliCa, which employs a 13.56-MHz band. This makes it easier to integrate the SIM card with the wireless communication function.

In the case of incorporating the antenna for the reflected-wave transmission in the storage medium such as a SIM card, it is preferable that this built-in antenna be disposed on both the front surface and back surface of the SIM card, in consideration of possibility that the orientation of the SIM card loaded in the slot of a cellular phone differs (which of the front surface and back surface of the SIM card faces outward differs) depending on the kind of cellular phone terminal.

The storage medium formed as a SIM card may be provided with a credit function for treating electronic money and so on as well as the SIM function for allowing a carrier to treat subscriber information. In this case, the control device can control the credit function via the reflected-wave transmission. Furthermore, if a high-capacity memory card function is added to the SIM card, the control device can access a control interface of the memory card via the reflected-wave transmission.

In such a case, the contact connecting means carries out data transfer control compatible with ISO/IEC 7816-3 as an IC card interface. The wireless communicating means transmits a command/response APDU defined by ISO/IEC 7816-4 between the control device and the storage medium.

Furthermore, in this case, the transfer protocol system (T = 0, T = 1) defined by ISO/IEC 7816-3 may be set for the subscriber information storing means from the cellular phone via the contact connecting means. In addition, at the time of access from the control device, the wireless communicating means recognizes the transfer protocol system set for the subscriber information storing means from the cellular phone, and carries out command/response control in accordance with the transfer protocol system.

The storage medium according to an embodiment of the present invention may further include service information storing means for storing therein service information relating to service provision. The "service information relating to service provision" refers to functions of electronic money, a credit card, and so on, which are provided by a contactless IC card in related arts. The control device can control deposit/withdrawal and accounting for the credit function via the wireless communicating means.

That is, according to an embodiment of the present invention, a contactless credit function can be easily provided to a cellular phone. Furthermore, the shape and terminals of a related-art SIM card can be used as they are. Thus, the embodiment of the present invention can be smoothly applied without the need to remodel a related-art cellular phone terminal. Furthermore, at the time of change of a cellular phone terminal, information can be easily shifted merely by moving the SIM card to the new terminal.

The storage medium according to an embodiment of the present invention may further include in the same shape a memory card function and a memory card terminal for access to the memory card function. Such a memory card function is controllable from the cellular phone via the memory card terminal and is controllable from the control device via the wireless communicating means. For example, the control device can control transmission/reception of media content to/from the memory card function. Furthermore, the control device can control reception and reproduction of media content recorded in the memory card function.

In this case, the wireless communicating means transmits a command/response APDU defined by ISO/IEC 7816-4 to the control device. It is preferable that a command/response that is to be transmitted between the control device and the storage medium include an information component that provides an access type for differentiation between a command/response for controlling the memory card function and a command/response compatible with ISO/IEC 7816-4. This feature allows access to the SIM card from both the cellular phone and the control device by the same transfer protocol without change of the transfer protocol set in the SIM card.

The memory card function has a memory card shape and a memory card terminal that are defined by the standard of any of a Memory Stick, SD card, MMC, Compact Flash (registered trademark), and USB memory. If a high-capacity memory card function is added to a SIM card equipped with a wireless communication function based on a reflected-wave transmission system, access via the reflected-wave transmission allows media content utilized on a cellular phone to be treated also from the control device. Combining such a memory card function with the SIM function and the credit function permits a carrier to provide a distribution service for media content.

Furthermore, it is also possible that a user utilizes content that is originally intended for use by a cellular phone with use of external apparatus (i.e., reproduces the content) by transferring the content via reflected-wave transmission. In reading out of content, the reflected-wave transmission allows high-speed operation with low power consumption.

### Advantageous Effects

An embodiment of the present invention can provide an excellent storage medium that has the same size and terminal shape as those of a SIM card defined by GSM (11.11) and ISO/IEC 7816 and can provide plural functions such as functions of a memory card, electronic money, and credit card on a cellular phone, and the embodiment can provide a communication system and a control device.

Furthermore, an embodiment of the present invention can provide an excellent storage medium that includes a contactless interface besides a contact connection interface for connection to a cellular phone, and of which stored contents relating to provision of services by a memory card, electronic money, and credit card are favorably controlled by an external control device via the contactless interface, and the embodiment can provide a communication system and a control device.

Moreover, an embodiment of the present invention can provide an excellent storage medium that is obtained by housing all circuit components relating to a contactless interface, including an antenna, in a SIM card defined by GSM (11.11) and ISO/IEC 7816 and can secure sufficient communication performance of the contactless interface without suffering from interference by a component in a cellular phone terminal even when being loaded in the cellular phone, and the embodiment can provide a communication system and a control device.

The storage medium according to an embodiment of the present invention is formed of a SIM card provided with a wireless communication function based on a reflected-wave transmission system, and is so configured as to allow access to the control interface of the SIM card from an external control device via such a wireless interface. Via the wireless interface, e.g. a command/response system based on ISO/IEC 7816-4 is transmitted. Therefore, the stored contents in the SIM card can be controlled also from the external control device via the wireless interface similarly to control from a cellular phone. Furthermore, the wireless function can be applied to various kinds of cards because it does not depend on a higher-level protocol of the SIM card.

In access to the SIM card via the wireless interface, access processing is carried out after recognition of the transfer protocol and the clock rate that are initially set for the SIM card from a cellular phone. This allows access to the SIM card from both the cellular phone and the control device with the same transfer protocol and clock rate without change of the transfer protocol and the clock rate set in the SIM card.

As functions of the SIM card, a credit function for treating electronic money and so on as well as the SIM function for allowing a carrier to treat subscriber information can be incorporated. Furthermore, the control device uses the credit function as well as the SIM function via the wireless interface to thereby carry out control of deposits/withdrawals and accounting. This allows the contactless credit function to be utilized also on a cellular phone. The shape and terminals of a related-art SIM card can be used as they are. In addition, the SIM card can be applied without the need to remodel a related-art cellular phone terminal. Furthermore, at the time of change of a cellular phone terminal, both subscriber information and electronic money information can be transferred to the new terminal merely by moving the SIM card to the new terminal.

If a 2.4-GHz frequency band is utilized for reflected-wave transmission via the wireless interface incorporated in the SIM card, the antenna size can be decreased compared with FeliCa, which employs a 13.56-MHz band. This can integrate the antenna with the card.

Furthermore, a high-capacity memory card function may be added to the SIM card. This allows access to a control interface of the memory card from an external control device via the reflected-wave transmission. That is, media content that is originally intended for use from a cellular phone can be treated from the external control device. Combining the high-capacity memory card function with the credit function permits a carrier to provide a distribution service for media content. Furthermore, a user can utilize content that is originally intended for use by a cellular phone from external apparatus by transmitting the content by the reflected-wave transmission. The reflected-wave transmission in reading out of content allows high-speed operation with low power consumption.

Still other objects, features and advantages of the present invention will become apparent from the following more detailed description based on embodiments of the invention and the accompanying drawings.

### Brief Description of Drawings

[Fig. 1]

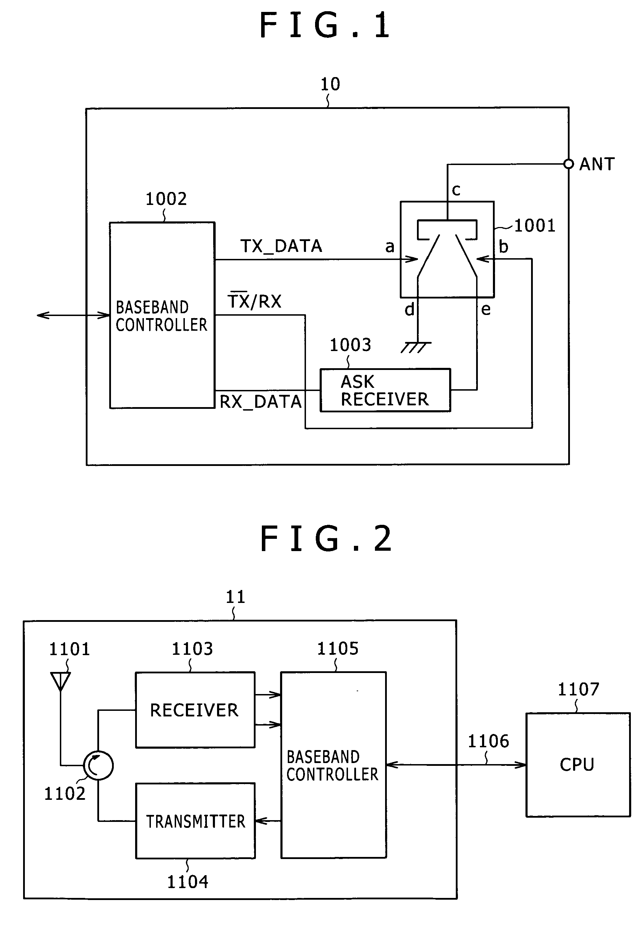

   Fig. 1 is a diagram showing a configuration example of a contactless wireless unit 100 applied to a reflector.
[Fig. 2]
   Fig. 2 is a diagram showing a configuration example of a wireless unit 11 applied to a reflected-wave read unit.
[Fig. 3]

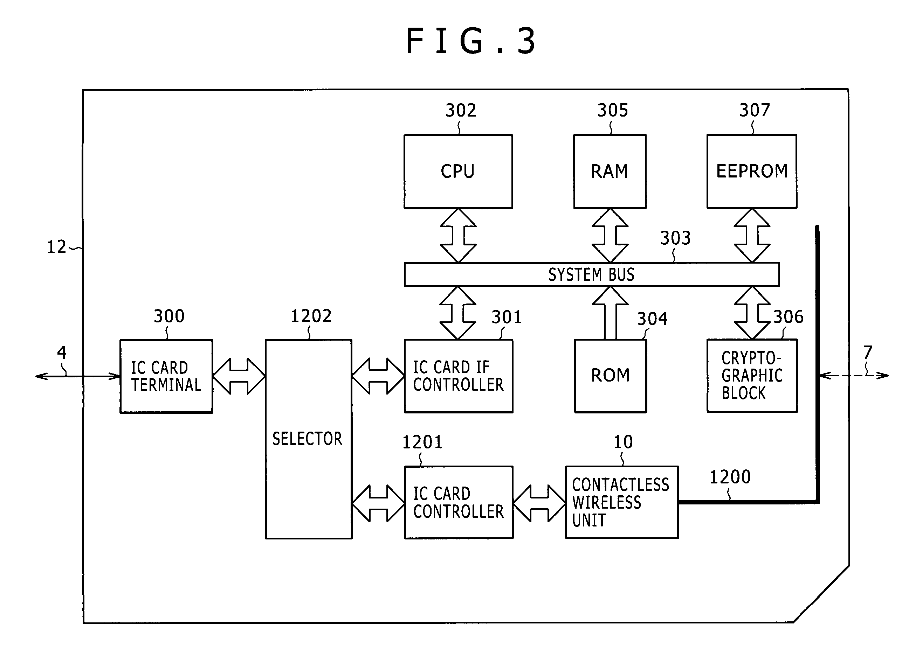

   Fig. 3 is a diagram showing the hardware configuration of a SIM card in which a reflected-wave transmission system is applied to a wireless interface.
[Fig. 4]

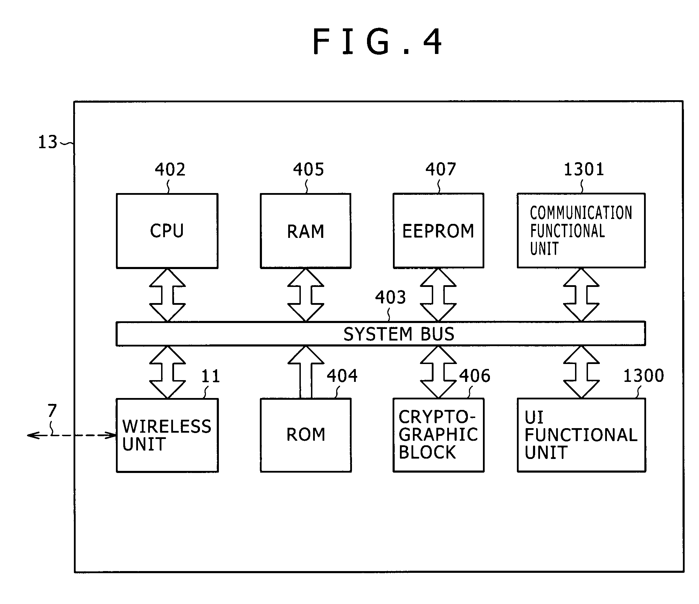

   Fig. 4 is a diagram schematically showing the hardware configuration of a control device that controls the SIM card 12 shown in Fig. 3 via the wireless interface 7 based on the reflected-wave transmission system.
[Fig. 5]

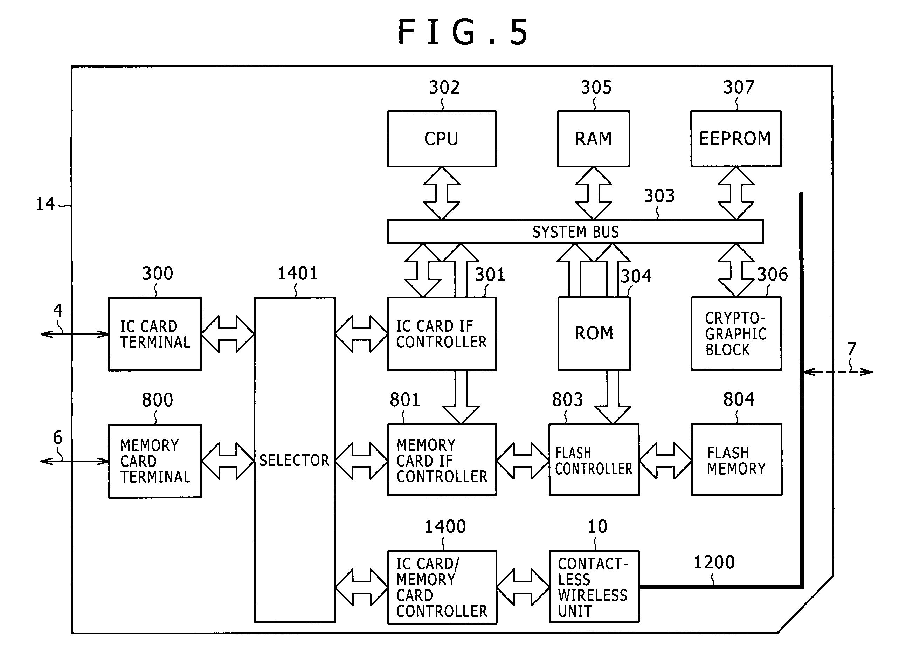

   Fig. 5 is a diagram showing a hardware configuration example of a SIM card 14 that is integrated with a memory card function and employs a reflected-wave transmission system as its wireless interface.
[Fig. 6]

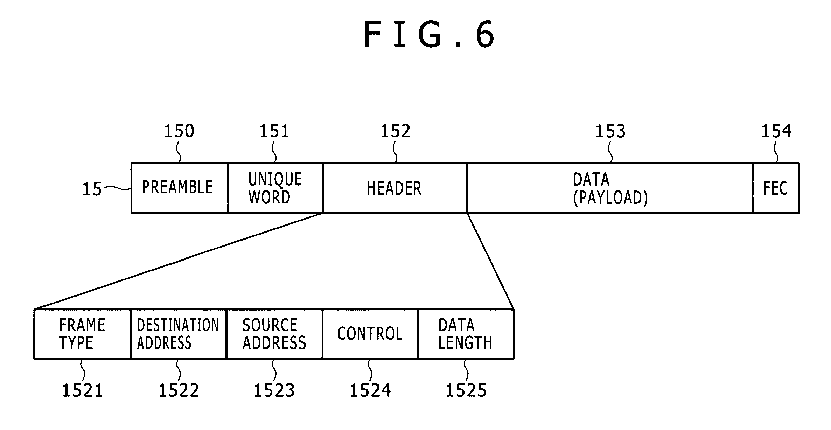

   Fig. 6 is a diagram showing a configuration example of a wireless frame.
[Fig. 7]

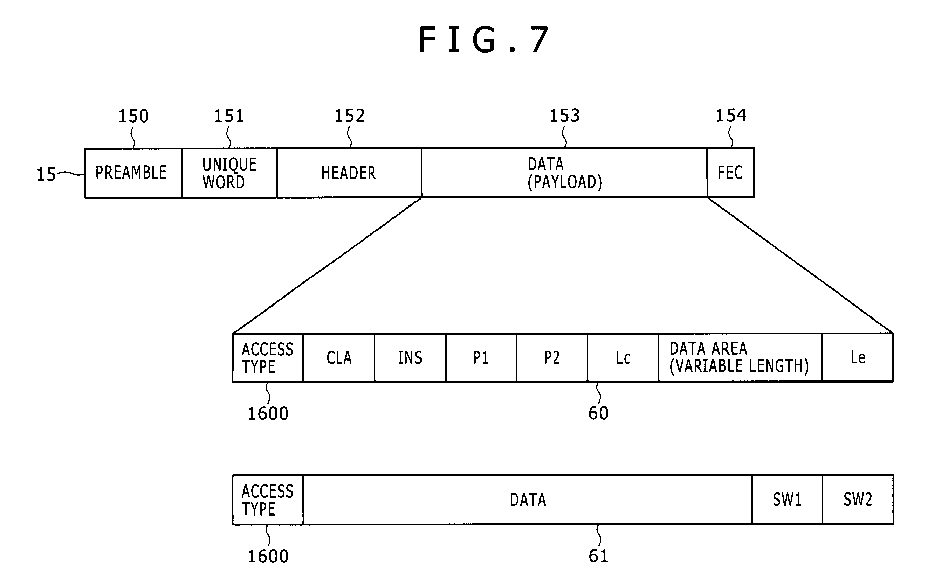

   Fig. 7 is a diagram showing a frame configuration in which a control command system applied to a SIM card is carried on a data frame,
[Fig. 8]

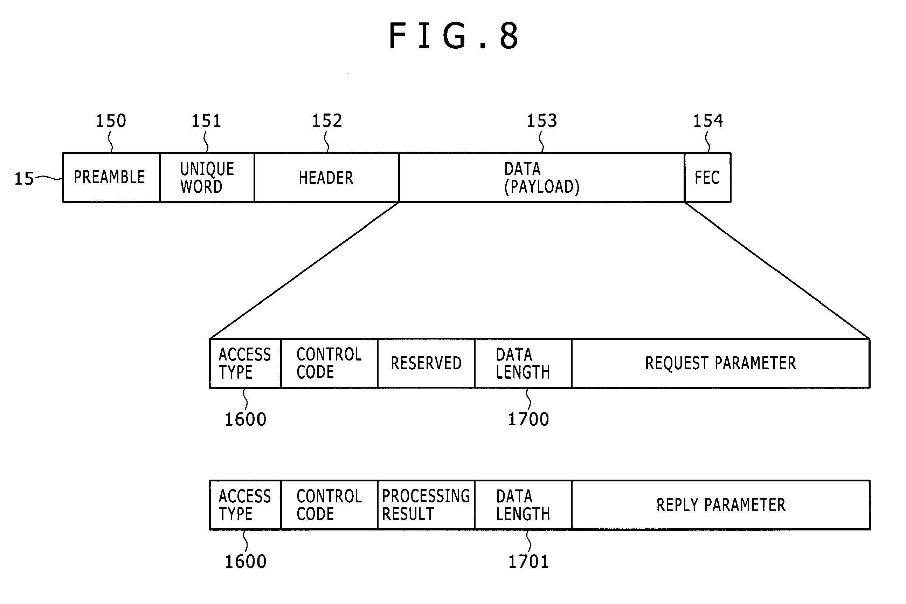

   Fig. 8 is a diagram showing a frame configuration example in which a control command system applied to a memory card is carried on a data frame.
[Fig. 9]

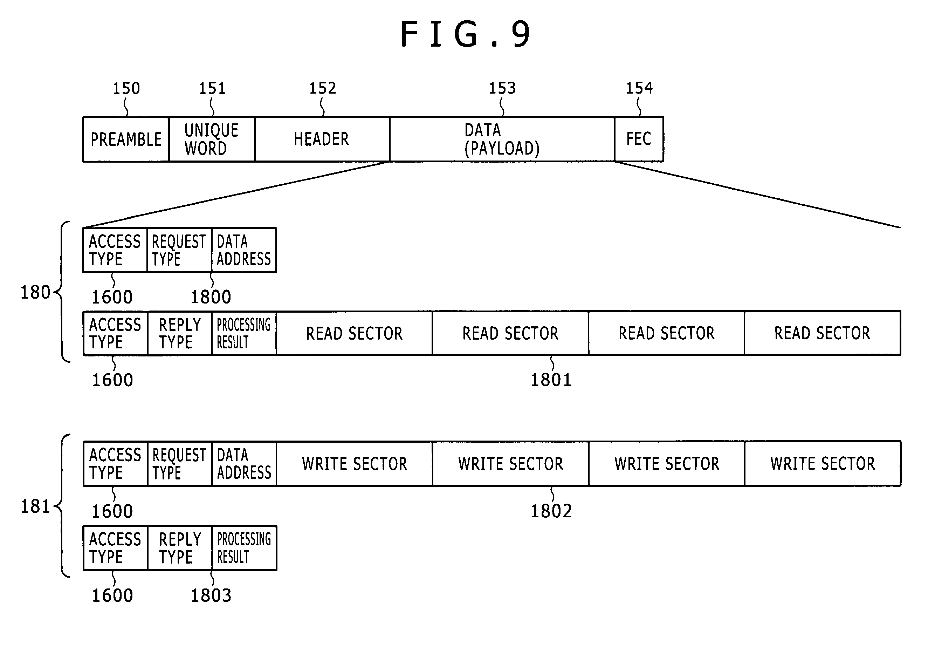

   Fig. 9 is a diagram showing a frame configuration example in which a control command system coupled to sector data for read/write from/to a memory card is carried on a data frame.
[Fig. 10]

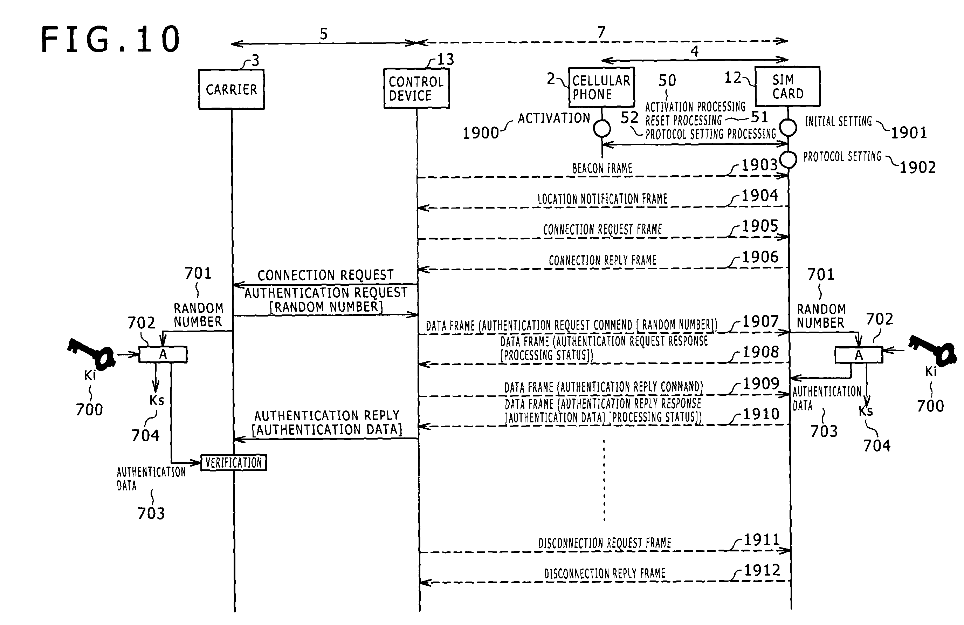

   Fig. 10 is a diagram showing an example of frame sequence for controlling the SIM card 12 from a control device 13.
[Fig. 11]

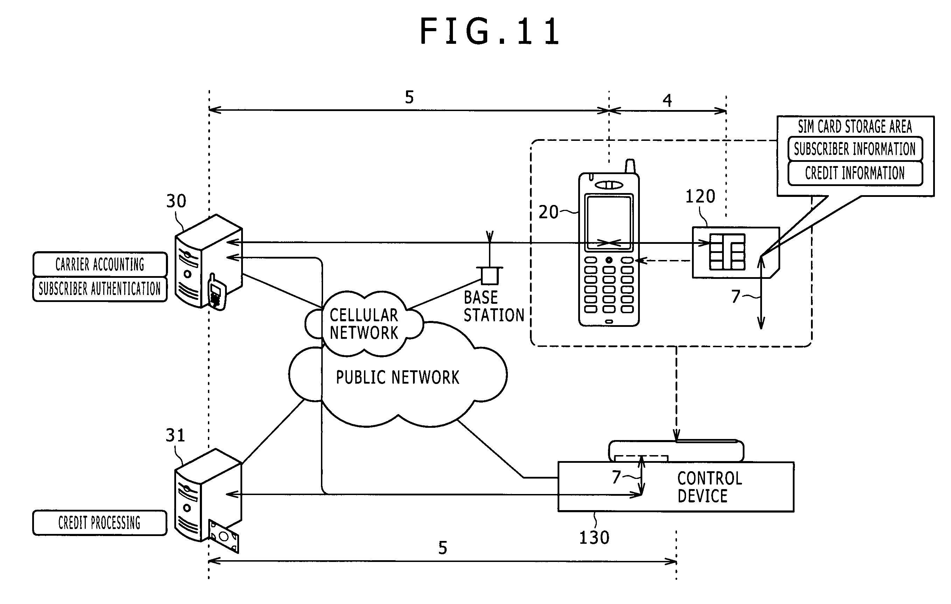

   Fig. 11 is a diagram showing a configuration example of a wireless communication system that offers a service of electronic money or a credit card with use of a SIM card and a control device according to one embodiment of the present invention.
[Fig. 12]

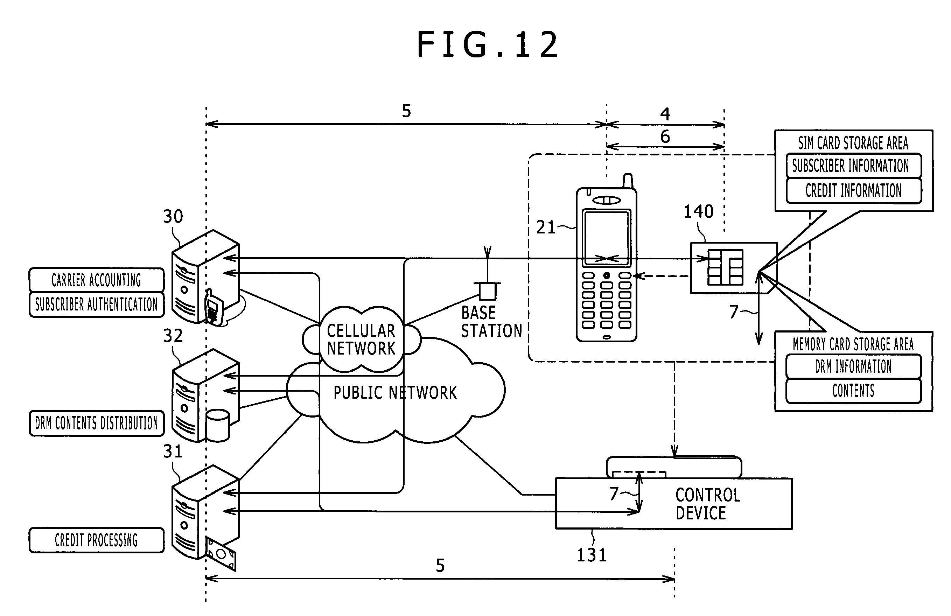

   Fig. 12 is a diagram showing a configuration example of a wireless communication system that offers a distribution service for copyright-managed content with use of a multifunction SIM card and a control device.
[Fig. 13]

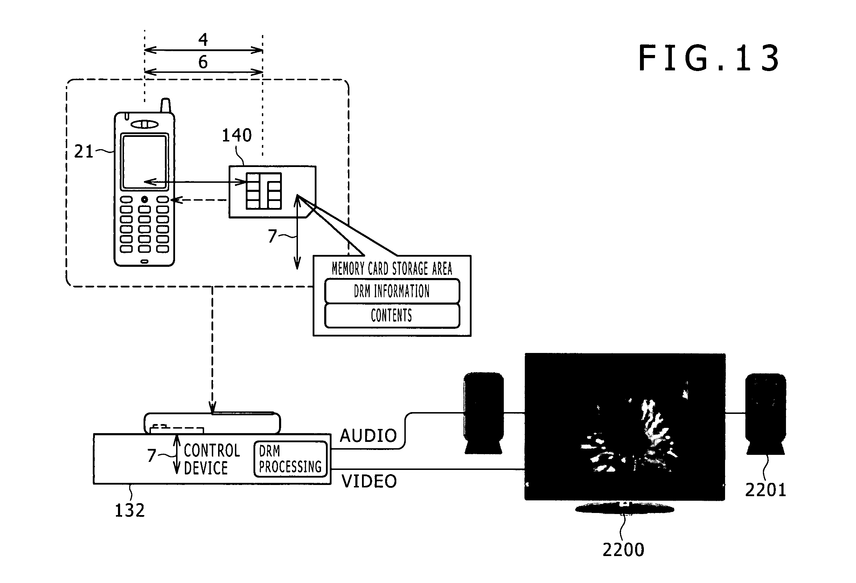

   Fig. 13 is a diagram showing an example in which DRM content recorded in a SIM card 140 is reproduced by a control device.
[Fig. 14A]
   Fig. 14A is a diagram showing the structure of a SIM card.
[Fig. 14B]
   Fig. 14B is a diagram showing the structure of a contactless IC card.
[Fig. 15]
   Fig. 15 shows an example in which a SIM card 1 is applied to a cellular phone 2.
[Fig. 16]
   Fig. 16 is a diagram for explaining the functions of a SIM card and an IC card.
[Fig. 17]
   Fig. 17 is a diagram schematically showing the hardware configuration of a SIM card (IC card).
[Fig. 18]
   Fig. 18 is a diagram schematically showing the hardware configuration of the cellular phone terminal 2 in which the SIM card 1 is loaded.
[Fig. 19]
   Fig. 19 is a flowchart showing the procedure of interface processing of a SIM card (IC card) based on the standards of ISO/IEC 7816-3, and -4.
[Fig. 20]
   Fig. 20 is a diagram showing command/response APDU applied to the interface of a SIM card (IC card) based on the ISO/IEC 7816-4 standard.
[Fig. 21]
   Fig. 21 is a diagram simply showing an example of the sequence of control of the protocol of authentication and encryption with use of a SIM card and an IC card.
[Fig. 22]
   Fig. 22 is a diagram schematically showing the hardware configuration of a memory card.
[Fig. 23]
   Fig. 23 is a diagram schematically showing a hardware configuration example of a card obtained by incorporating a SIM card and a memory card in a one-shape body.

### Explanation of Reference Numerals

- 1: SIM card
- 2: Cellular phone
- 4: IC card interface
- 6: Memory card interface
- 7: Wireless interface
- 10: Contactless wireless unit
- 1001: Antenna switch
- 1002: Baseband controller
- 1003: ASK receiver
- 11: Wireless unit
- 1101: Antenna
- 1102: Circulator
- 1103: Receiver
- 1104: Transmitter
- 1105: Baseband controller
- 1106: System bus
- 1107: CPU
- 12: SIM card
- 1200: Built-in antenna
- 1201: IC card controller
- 1202: Selector
- 13: Control device
- 1301: UI functional unit
- 1302: Communication functional unit
- 14: SIM card
- 1400: IC card/memory card controller
- 1401: Selector
- 30: Carrier
- 31: Center
- 300: IC card terminal
- 301: IC card interface controller
- 302: CPU
- 303: System bus
- 304: ROM
- 305: RAM
- 306: Cryptographic block
- 307: EEPROM
- 400: IC card slot
- 401: IC card interface controller
- 402: CPU
- 403: System bus
- 404: ROM
- 405: RAM
- 406: Cryptographic block
- 407: EEPROM
- 408: UI functional unit
- 800: Memory card terminal
- 801: Memory card interface controller
- 802: Cryptographic block
- 803: Flash controller
- 804: Flash memory
- 2200: Television
- 2201: Speaker

### Best Modes for Carrying Out the Invention

Embodiments of the present invention will be described in detail below with reference to the drawings.

One embodiment of the present invention provides a storage medium obtained by incorporating a wireless communication function in a SIM card in which subscriber information of a cellular phone is stored. Basically, this storage medium has the same size and terminal shape as those defined by ISO/IEC 7816.

Furthermore, the storage medium according to one embodiment of the present invention employs a reflected-wave transmission system as its wireless communication system. The term "reflected-wave transmission" refers to a communication system in which a reflector sends a reflected-wave signal arising from execution of modulation processing for received electric waves to thereby allow wireless transmission. The reflected-wave transmission has a feature that low power consumption can be realized in a communication mode in which transmission from the reflector side occupies almost all of the communication.

A reflected-wave transmission system is formed of a reflector that transmits data by using a reflected wave arising from modulation processing, and a reflected-wave read unit that reads out data from a reflected wave sent by the reflector. At the time of data transmission, the reflected-wave read unit transmits an unmodulated carrier. In response to this, the reflector executes modulation processing corresponding to transmission data for the unmodulated carrier by carrying out load impedance operation such as turning on/off of the antenna terminal, to thereby send out data. The reflected-wave read unit receives this reflected wave and can acquire the transmission data through demodulation and decode processing.

The reflector is formed of e.g. an antenna that reflects incident continuous electric waves, a transmission data generation circuit, and an impedance change circuit that changes the impedance of the antenna depending on transmission data. Fig. 1 shows a configuration example of a contactless wireless unit 10 applied to the reflector.

Reference numeral 1001 denotes an antenna switch as a single-pole/double-throw (SPDT) switch. This antenna switch functions both for production of a reflected wave and for switching between transmission and reception. A terminal c is connected to an antenna.

At the time of data transmission, a terminal b is kept at the off-state by a baseband controller 1002, so that the right-end switch is kept at the off-state. Furthermore, transmission data (TX_DATA) is applied to a terminal a from the baseband controller 1002. Because a terminal d is grounded, the left-end switch is shorted when the transmission data is 1, and is opened when the transmission data is 0. In this manner, phase modulation is executed for an unmodulated carrier received via the antenna (not shown), so that the resultant wave is emitted from the antenna as a modulated reflected-wave signal.

At the time of data reception, the terminal b is kept at the on-state by the baseband controller 1002, and an ASK modulated signal received by the antenna is sent to an ASK receiver 1003 via a terminal e. The sent signal is demodulated by the ASK receiver 1003 so as to be converted to received data (RX_DATA). In this manner, the received data is sent to the baseband controller 1002.

Fig. 2 shows a configuration example of a wireless unit 11 applied to the reflected-wave read unit side. The wireless unit 11 includes an antenna 1101, a circulator 1102, a receiver 1103, a transmitter 1104, and a baseband controller 1105.

When the wireless unit 11 reads data from the contactless wireless unit 10 shown in Fig. 1, an unmodulated carrier is generated from the transmitter 1104 in response to an instruction by the baseband controller 1105. The unmodulated carrier passes through the circulator 1102 and is emitted from the antenna 1101 toward the contactless wireless unit 10. The circulator 1102 is used to separate a transmission wave (unmodulated carrier) from a received wave (modulated reflected wave) when transmission and reception are simultaneously carried out.

As described above, a reflected wave is produced from the unmodulated carrier in the contactless wireless unit 10, so that the wave is returned to the wireless unit 110 as a modulated reflected wave. This modulated reflected wave is received by the receiver 1103 via the antenna 1101 and the circulator 1102 and is converted to a baseband IQ signal, followed by being demodulated by the baseband controller 1105.

On the other hand, at the time of transmission of data or a control command from the wireless unit 110 to the contactless wireless unit 10, an ASK modulated wave is generated by the transmitter 1104 in accordance with transmission data from the baseband controller 1105, so that the generated wave is emitted from the antenna 1101 similarly. The baseband controller 1105 is connected to a system bus 1106, and exchanges data with a central processing unit (CPU) 1107 via the system bus 1106. The CPU 1107 executes processing for a higher layer of the communication protocol and processing for control of the operation of the entire unit.

It is also possible that in the contactless wireless unit 10, the antenna switch 1001 for changing the load impedance of the antenna is formed of a CMOS transistor incorporated in a circuit module. Alternatively, the antenna switch 1001 may be formed of an integrated circuit (IC) composed of gallium arsenic (GaAs) separately from a circuit module so that high-speed switching operation can be realized with low power consumption. In the latter case, the rate of data transmission through reflected-wave modulation is enhanced, and the power consumption is suppressed to several tens of microwatts or lower. Therefore, considering the fact that the power consumption of wireless LAN at the time of communication is in the range of about several hundreds of milliwatts to several watts, it can be said that the reflected-wave communication has overwhelming performance difference compared with general wireless LAN, which involves significantly higher power consumption (refer to e.g. Japanese Patent Laid-Open No. 2005-64822).

Furthermore, the contactless wireless unit 10 equipped with the reflector (or a SIM card equipped with the contactless wireless unit 10) does not generate a carrier but merely reflects received electric waves. Therefore, it is not regarded as a wireless station and hence is treated as being exempt from regulations imposed on radio-wave communication. Furthermore, other contactless communication systems such as an electromagnetic induction system employ a frequency in the range of several megahertz to several hundreds of megahertz (e.g., 13.65 MHz). In contrast, the reflected-wave communication system can realize high-speed data transmission with use of e.g. a 2.4-GHz high frequency band called the ISM band (Industry Science and Medical band).

Performance specifications of the reflected-wave transmission system are shown in Table 1. In Table 1, "Up" indicates the direction from the contactless wireless unit 10 to the wireless unit 11, and "Down" indicates the direction from the wireless unit 11 to the contactless wireless unit 10.

**[Table 1]**

| Items | Specifications |
|---|---|
| Use frequency band | 2.4-GHz band |
| Transmission rate | Up: 20 Mbps, Down: 2.5 Mbps |
| Modulation system | Up: QPSK/BPSK, Down: ASK |
| Transmission system | Up-down asymmetric TDD system |
| Maximum throughput | Up: 16 Mbps, Down: 1.5 Mbps |
| Error correcting code | Up: Reed Solomon code, Down: BCH code |
| Retransmission control system | Hybrid ARQ system |
| Transmission power of wireless unit | 10 mW |
| Antenna gain of wireless unit | 5 dBi |
| Power consumption of reflector | 30 mW (Average at the time of communication) |
| Communication range | Maximum 3 m (depends on reflector side antenna) |

Fig. 3 shows the hardware configuration of a SIM card 12 in which the reflected-wave transmission system is applied to a wireless interface. This SIM card has a configuration obtained by additively providing the SIM card shown in Fig. 17 with the contactless wireless unit 10, a built-in antenna 1200, an IC card controller 1201, and a selector 1202.

A wireless interface 7 functions to control the SIM card 12 via the reflected-wave transmission system, and characteristically transports data of command/response APDU (see Fig. 20) applied to the IC card interface by using a wireless frame.

Upon receiving a wireless frame via the built-in antenna 1200, the contactless wireless unit 10 transmits command data carried on the frame to the IC card controller 1201.

The IC card controller 1201 is connected via the selector 1202 to the IC card interface controller 301 by a predetermined electric signal applied to the IC card interface. The selector 1202 functions to select one of the path for an electric signal from the IC card controller 1201 and the path for an electric signal from the IC card terminal 300.

The IC card controller 1201 transmits the command data to the IC card interface controller 301 by a data transfer system complying with ISO/IEC 7816. Subsequently, the IC card controller 1201 receives response data as the result of command processing by the CPU 302. The response data is carried on a wireless frame by the contactless wireless unit 10, followed by being transmitted via the built-in antenna 1200 to the wireless interface 7.

Regarding the configuration of the built-in antenna 1200, it is preferable that the built-in antenna be disposed on both the front surface and back surface of the SIM card, in consideration of possibility that the orientation of the SIM card 12 loaded in the slot of a cellular phone differs (which of the front surface and back surface of the SIM card 12 faces outward differs) depending on the kind of cellular phone terminal.

Fig. 4 schematically shows the hardware configuration of a control device 13 that controls the SIM card 12 shown in Fig. 3 via the wireless interface 7 based on the reflected-wave transmission system. This control device 13 controls the SIM card 12 from the wireless unit 11 via the wireless interface 7.

The wireless unit 11 transmits/receives data of the command/response APDU (described above) applied to the IC card interface, and therefore provides the control device 13 with the function equivalent to that of the IC card interface controller 401 in the cellular phone shown in Fig. 18. The CPU 402, a system bus 403, the ROM 404, the RAM 405, the cryptographic block 406, and the EEPROM 407 have the same functions as those described for Fig. 18.

Furthermore, a UI functional unit 1300 and a communication functional unit 1301 are provided corresponding to application functions offered by the control device 13. Examples of an application by the control device 13 will be described later.

In Fig. 23, a configuration example of a card obtained by incorporating a SIM card and a memory card in a one-shape body is shown. Fig. 5 shows a hardware configuration example of a SIM card 14 that is integrated with a memory card function and employs the reflected-wave transmission system as its wireless interface.

This SIM card 14 includes, besides the components in the SIM card shown in Fig. 23, the built-in antenna 1200, the contactless wireless unit 10, an IC card/memory card controller 1400, and a selector 1401.

The SIM card 14 carries out wireless control for the SIM card functional part and wireless control for the memory card functional part via the contactless wireless unit 10, similarly to the SIM card shown in Fig. 3. That is, via the wireless interface 7, a command/response for controlling the memory card is transported on a common wireless frame.

Furthermore, the SIM card 14 receives/transmits command data/response data via the contactless wireless unit 10. The IC card/memory card controller 1400 controls command/response transfer with respect to the memory card interface controller 801.

The selector 1401 functions to select one of the path for an electric signal that has passed through the memory card terminal 800 and the path for an electric signal from the IC card/memory card controller 1400.

A memory card control system is disclosed in e.g. Japanese Patent Laid-Open No. 2006-202260, which has been already assigned to the present assignee. A transport system on a wireless interface is disclosed in e.g. Japanese Patent Laid-Open No. 2006-146460 and Japanese Patent Application No. 2006-330894, which have been already assigned to the present assignee.

Fig. 6 shows a configuration example of a wireless frame. A common configuration is provided in both transmission and reception.

A preamble 150 is data for bit synchronization and so on for the frame. A unique word 151 is fixed-pattern data for frame synchronization. A header 152 is composed of a frame type 1521, a destination address 1522, a source address 1523, control 1524, and a data length 1525. The frame type 1521 provides differentiation among a beacon, control frame, data frame, and so on. The destination address 1522 and the source address 1523 indicate the transmission and reception destination of the frame. The control 1524 functions for retransmission control, arrival confirmation, and so on. The data length 1525 stores the data length of the frame. Data 153 is an area for data that is to be transmitted and received. In a data frame, the data 153 is generally referred to as "payload." FEC 154 is an error correcting code for executing frame error check, and e.g. CRC32 is used for the FEC 154.

Fig. 7 shows a frame configuration in which a control command system applied to a SIM card is carried on a data frame.

On the payload 153 of a wireless frame (data frame) 15, the command APDU 60 or the response APDU 61 shown in Fig. 20 is carried together with an access type 160. The access type 1600 is type information for discrimination of the subject of control by the above-described IC card/memory card controller 1400 of the SIM card 14. The access type 1600 of Fig. 7 is given the value that specifies the IC card side as the control subject.

Fig. 8 shows a frame configuration example in which a control command system applied to a memory card is carried on a data frame. The same frame configuration is disclosed also in Japanese Patent Application No. 2006-330894 (described above), and characteristically implements direct register control, command control, and buffer control for a memory card via wireless communication.

In the data frame shown in Fig. 8, a control command 1700 or response 1701 is carried on the payload 153 together with the access type 1600. Similarly to the access type shown in Fig. 7, the access type of Fig. 8 is also type information for discrimination of the subject of control by the IC card/memory card controller 1400 of the SIM card 14. The access type of Fig. 8 is given the value that specifies the memory card side as the control subject.

Fig. 9 shows a frame configuration example in which a control command system coupled to sector data for read/write from/to a memory card is carried on a data frame. Reference numeral 180 denotes a payload configuration for read, and reference numeral 181 denotes a payload configuration for write. Reference numerals 1800 and 1801 denote a command and a response for read, and reference numerals 1802 and 1803 denote a command and a response for write. The same frame configuration is disclosed also in Japanese Patent Laid-Open No. 2006-146460 (described above). The frame configuration characteristically allows implementation of a series of register control, command control, and buffer control on the memory card side, to thereby carry out read/write on a sector-by-sector basis. Furthermore, the transfer of data coupled to sector data can enhance the wireless frame efficiency.

In the data frame shown in Fig. 9, the control command 1800 (1802) or response 1801 (1803) is carried on the payload 153 together with the access type 160. Similarly to the access types shown in Figs. 7 and 8, the access type of Fig. 9 is also type information for discrimination of the subject of control by the IC card/memory card controller 1400 of the SIM card 14. The access type of Fig. 9 is given the value that specifies the memory card side as the control subject.

Fig. 10 shows an example of frame sequence for controlling the SIM card 12 from the control device 13. In this example, the control device 13 executes the authentication sequence that is executed by the cellular phone 2 for the carrier 3 in Fig. 21. The description of the example is based on the premise that the control device 13 is connected to the public network 5 or another fixed network. As for the system of communication between the control device 13 and the carrier 3, a detailed description is omitted because the system has no direct relation to the gist of the present invention, similarly to the case of Fig. 21.

The SIM card 12 is used in such a manner as to be inserted in the slot of the cellular phone 2. Upon the activation (1900) of the cellular phone 2, power is input from the cellular phone 2 to the SIM card 12. In response to the power input, the SIM card 12 executes initial setting (1901) for wireless communication. Furthermore, the activation processing 500, the reset processing 501, and the protocol setting processing 502 (see Fig. 19) are executed by the cellular phone 2 for the SIM card 12. Due to this operation, the IC card interface controller 301 is so set as to carry out data transfer in accordance with a predetermined protocol.

The IC card controller 1201 also has to follow the same protocol for data transfer to the IC card interface controller 301. Accordingly, the selector 1202 monitors the IC card interface between the IC card terminal 300 and the IC card interface controller 301. This allows the selector 1202 to be provided with a function to acquire the protocol type information and clock rate conversion factor from a PTS request and a PTS reply (described above) and notify the IC card controller 1201 of them. In this manner, protocol setting processing (1902) for the IC card controller 1201 is completed.

In this frame sequence example, connection-oriented connection is carried out from the control device 13 to the SIM card 12. Specifically, the control device 13 simultaneously sends a beacon frame 1903 periodically and waits for a reply from the SIM card 12. When the SIM card 12 (cellular phone equipped with the SIM card 12) is brought close to the control device 13 by user's operation, the SIM card 12 receives the beacon frame (1903). In response to this reception, the SIM card 12 notifies the control device 13 of its location by a location notification frame (1904). Upon receiving the location notification frame (1904), the control device 13 transmits a connection request frame (1905). Subsequently, upon reception of a connection reply frame (1906) from the SIM card 12, connection is established.

From then on, command/response control for the SIM card 12 from the control device 13 is carried out by using the data frame shown in Fig. 7. Specifically, the INS (601) in an authentication request command (1907) is given the value indicating "authentication request." The random number (701) is specified in the data area (605) of the command APDU, and the data length thereof is specified in the Lc (604).

The SIM card 12 receives the authentication request command (1907), and starts arithmetic operation on the authentication data (703) and the session key Ks (704). In addition, the SIM card 12 transmits an authentication request response (1908). In the SW1 and SW2 in the response APDU, the processing status indicating the normal start of the processing is set.

The control device 13 issues an authentication reply command 1909 to the SIM card 12 in order to acquire the authentication data (703). The value indicating "authentication reply" is specified in the INS (601) in the command APDU, and the data length of the authentication data (703) is specified in the Lc (604).

The SIM card 12 adds the authentication data (703) obtained as an arithmetic result to the data area (610) of a response APDU, and transmits an authentication reply response (1910). At this time, the processing status is set in the SW1 and SW2 in the response APDU.

In this manner, command control equivalent to that carried out from the cellular phone 2 (see Fig. 21) can be carried out from the control device 13 via wireless communication. Furthermore, for the SIM card 14 (referred to as Fig. 5) equipped also with a memory card function, command control equivalent to that carried out from the cellular phone 2 can be carried out by using the data frame shown in Fig. 8. Moreover, using the data frame shown in Fig. 9 allows high-speed memory data access.

After carrying out predetermined SIM card control and memory card control for the same connection, the control device 13 transmits a disconnection request frame (1911) to the SIM card 12 (or 14). Subsequently, upon receiving a disconnection reply frame (1912) from the SIM card 12 (or 14), the control device 13 ends the communication.

Fig. 11 shows a configuration example of a wireless communication system that offers a service of electronic money or a credit card with use of a SIM card and a control device according to one embodiment of the present invention.

A SIM card 120 has a function to treat subscriber information for the carrier 30 similarly to a related-art SIM card. Furthermore, the SIM card 120 has a function of electronic money or a credit card (credit function) that is offered in the form of an IC card generally. Specifically, information relating to electronic money or a credit card (credit information) is stored in the storage area of the SIM card (IC card), and a protocol for safely treating this information is shared by apparatus to which the card is applied and the center 31. This protocol is realized by carrying out a series of command/response control via the IC card interface 4 or the wireless interface 7.

The SIM card 120 is controlled by a cellular phone 20 via the IC card interface 4 similarly to a typical SIM card. A related-art cellular phone covers only the SIM function. In contrast, in the present embodiment, the cellular phone 20 covers the credit function as well as the SIM function.

A control device 130 accesses the SIM card 120 via the wireless interface 7 and is connected to the carrier 30 and the center 31 via the communication network 5.

In the system configuration shown in Fig. 11, the cellular phone 20 can be used through subscriber authentication similarly to related arts by applying the SIM card 120 to the cellular phone 20. Furthermore, if the cellular phone 20 covers the credit function, a service of electronic money/credit card can be utilized via a cellular network.

Moreover, also via the control device 130, a service of electronic money/credit card can be utilized similarly. In this case, the control device 130 serves as a payment terminal that executes processing of deposits/withdrawals, accounting, and so on (credit processing) in utilization of electronic money/credit card between the SIM card 120 and the center 31.

In addition, in the system shown in Fig. 11, subscriber authentication and credit processing can be executed by using the same SIM card. This allows the carrier 30 of the cellular phone to have enhanced flexibility of service provision, and thus the carrier becomes capable of offering a user a service of electronic money and credit card in addition to the original telephone call service.

Furthermore, subscriber information and credit information can be managed by one SIM card. This offers a cellular phone user an advantage that, at the time of change of a cellular phone terminal, these pieces of information can be shifted merely by moving the SIM card to the new terminal.

Fig. 12 shows a configuration example of a wireless communication system that offers a distribution service for copyright-managed (DRM (Digital Right Management) content with use of the above-described multifunction SIM card and a control device.

The participators of the DRM system are typically a content provider, license manager, and user. The user owns a content reproduction device and utilizes content by using the device. The license manager issues a license to the user. The content provider offers content to the user. In the DRM, providing the user with the license (use permit) of a content is realized by giving the content key to a (specific) valid reproduction device of the user. The "valid reproduction device" means that the reproduction device can process a cryptographic key, content key, and decrypted content without leaking them to the external.

A SIM card 140 has the configuration shown in Fig. 5, and hence has the function of a high-capacity memory card in addition to the functions of the SIM card 120 (SIM function, credit function). The memory card function includes a copyright management (DRM) function, and control of authentication and control of content encryption are carried out between the SIM card 140 and apparatus to which the SIM card 140 is applied.

The system configuration of Fig. 12 is based on the assumption that a cellular phone 21 has a SIM function, credit function, and function to reproduce DRM content. In this system, the cellular phone 21 controls the SIM card 140 via the IC card interface 4 and the memory card interface 6.

A control device 131 accesses the SIM card 140 via the wireless interface 7 and is connected to the carrier 30, the center 31, and a content distribution server 32 via the communication network 5 (fixed network).

In the system configuration shown in Fig. 12, the following services can be utilized by applying the SIM card 140 to the cellular phone 21: a telephone call via a cellular network, service of electronic money/credit card, and content distribution service. Moreover, the same services can be utilized via the control device 131.

In case that the latter content distribution service is used, the control device 131 executes processing of downloading DRM content for the SIM card 140, and carries out a license purchase procedure through credit processing for use of the content. By thus combining download processing and credit processing, content with protected copyright, such as music or video, can be purchased simultaneously through simple user's operation such as holding of the cellular phone 21 over the control device 131.

Furthermore, subscriber authentication, credit processing, and download processing can be carried out by using the same SIM card. This offers a cellular phone carrier an advantage that the carrier can provides a user with a content distribution service in addition to a telephone call service and service of electronic money/credit card and thus is allowed to have enhanced flexibility of service provision.

Furthermore, subscriber information, credit information, and content information can be managed by one SIM card. This offers a cellular phone user an advantage that, at the time of change of a cellular phone terminal, these pieces of information can be collectively shifted merely by moving the SIM card to the new terminal.

Fig. 13 shows an example in which DRM content recorded in the SIM card 140 of Fig. 12 is reproduced by a control device.

A control device 132 acquires DRM information and an encrypted content that are stored in the memory card storage area of the SIM card 140 via the wireless interface 7, and reproduces the content through DRM processing. The control device 132 outputs video content to a television 2200 and outputs music content to a speaker 2201. For this purpose, the control device 132 has output functions compatible with the respective content media.

In this manner, DRM content, which can be reproduced only by the cellular phone 21 equipped with a memory card in related arts normally, can be reproduced also on another apparatus by sending out the content via the wireless interface 7. Furthermore, a use style for enjoyment of an individual person can be changed to one for enjoyment of plural persons.

The present invention has been described in detail above with reference to specific embodiments of the invention. It should be apparent that various modifications and substitutions might be incorporated into the embodiments by those skilled in the art without departing from the gist of the invention.

In the present specification, the description is made with focus on the embodiment that is applied to a SIM card defined by GSM (11.11) and ISO/IEC 7816 as a storage medium in which subscriber information of a cellular phone is stored. However, the gist of the present invention is not necessarily limited thereto. Although presently the SIM card is widely used in cellular phones of the GSM and W-CDMA systems, of course an embodiment of the present invention can be similarly applied also to various types of storage media in which subscriber information of a cellular phone is stored, irrespective of the presence or absence of compatibility with the SIM card.

That is, the embodiments of the invention are disclosed merely for the purpose of exemplification. Therefore, the description in the present specification should not be interpreted to limit the scope of the invention. The appended claims should be consulted to determine the gist of the invention.

## Claims

1. A storage medium used in such a manner as to be loaded in a cellular phone, the storage medium comprising:
contact connecting means for functioning for connection to the cellular phone;
wireless communicating means for functioning for connection to an external control device; and
subscriber information storing means for storing subscriber information of the cellular phone; wherein
the subscriber information storing means is controllable from the cellular phone via the contact connecting means and is controllable from the control device via the wireless communicating means.

2. The storage medium according to claim 1, wherein
the wireless communicating means includes a reflector that transmits data by a reflected wave arising from modulation processing, and the control device includes a reflected-wave read unit that transmits an unmodulated carrier and reads out data from a modulated reflected wave from the reflector, and data communication with the control device is carried out by a reflected-wave transmission system.

3. The storage medium according to claim 1, wherein
the storage medium has the same card size as a card size defined by GSM (11.11) (Global System for Mobile Communications (11.11)), and the contact connecting means has the same terminal shape as a terminal shape defined by ISO/IEC (International Organization for Standardization/International Electrotechnical Commission) 7816-2.

4. The storage medium according to claim 1, wherein
the contact connecting means carries out data transfer control compatible with ISO/IEC 7816-3 as an IC (Integrated Circuit) card interface, and
the wireless communicating means transmits a command/response application protocol data unit (APDU) defined by ISO/IEC 7816-4 to the control device.

5. The storage medium according to claim 4, wherein
a transfer protocol system (T = 0, T = 1) and a clock rate conversion factor (F, D) that are defined by ISO/IEC 7816-3 are allowed to be set for the subscriber information storing means from the cellular phone via the contact connecting means, and
at the time of access from the control device, the wireless communicating means recognizes the transfer protocol system and the clock rate conversion factor that are set for the subscriber information storing means from the cellular phone, and carries out command/response control in accordance with the transfer protocol system and the clock rate conversion factor.

6. The storage medium according to claim 1, further comprising
service information storing means for storing service information relating to service provision, wherein
service information stored in the service information storing means is controllable from the cellular phone via the contact connecting means and is controllable from the control device via the wireless communicating means.

7. The storage medium according to claim 6, wherein
the service information storing means includes at least one of electronic money and a credit card as service information relating to service provision.

8. The storage medium according to claim 1, further comprising
a memory card function and a memory card terminal configured to be provided in the same shape, the memory card terminal being used for access to the memory card function, wherein
the memory card function is controllable from the cellular phone via the memory card terminal and is controllable from the control device via the wireless communicating means.

9. The storage medium according to claim 8, wherein
the memory card function has a memory card shape and a memory card terminal that are defined by a standard of any of a Memory Stick, a Secure Digital (SD) card, a MultiMedia Card (MMC), a Compact Flash (registered trademark), and a Universal Serial Bus (USB) memory.

10. The storage medium according to claim 8, wherein
the wireless communicating means is allowed to transmit a command/response application protocol data unit (APDU) defined by ISO/IEC 7816-4 to the control device, and
a command/response to the control device includes an information component that provides an access type for differentiation between a command/response for controlling the memory card function and a command/response compatible with ISO/IEC 7816-4.

11. The storage medium according to claim 2, wherein
a built-in antenna for reflected-wave transmission is disposed both on a front surface of the storage medium and on a back surface of the storage medium.

12. A communication system including a cellular phone, a storage medium that is used in such a manner as to be loaded in the cellular phone and stores at least subscriber information of the cellular phone, and a control device that provides an application function with use of the storage medium, the communication system comprising:
contact connecting means for connecting the storage medium to the cellular phone; and
wireless communicating means for connecting the storage medium to an external control device; wherein
the cellular phone is allowed to control the subscriber information via the contact connecting means and the control device is allowed to control the subscriber information via the wireless communicating means.

13. The communication system according to claim 12, wherein
the wireless communicating means is formed of a reflector that is included in the storage medium and transmits data by a reflected wave arising from modulation processing and a reflected-wave read unit that is included in the control device and transmits an unmodulated carrier to read out data from a modulated reflected wave from the reflector, and the wireless communicating means carries out data communication by a reflected-wave transmission system.

14. The communication system according to claim 12, wherein
the storage medium is formed to have the same card size as a card size defined by GSM (11.11), and the contact connecting means has the same terminal shape as a terminal shape defined by ISO/IEC 7816-2.

15. The communication system according to claim 14, wherein
the contact connecting means carries out data transfer control compatible with ISO/IEC 7816-3 as an IC card interface, and
the wireless communicating means transmits a command/response APDU defined by ISO/IEC 7816-4.

16. The communication system according to claim 15, wherein
the cellular phone sets a transfer protocol system (T = 0, T = 1) and a clock rate conversion factor (F, D) that are defined by ISO/IEC 7816-3 for the storage medium via the contact connecting means, and
at the time of access to the storage medium via the wireless communicating means, the control device recognizes the set transfer protocol system and the set clock rate conversion factor, and carries out command/response control in accordance with the transfer protocol system and the clock rate conversion factor.

17. The communication system according to claim 12, wherein
the storage medium further stores service information relating to service provision, and
the cellular phone is allowed to control the service information via the contact connecting means and the control device is allowed to control the service information via the wireless communicating means.

18. The communication system according to claim 17, wherein
the service information includes at least one of electronic money and a credit card, and
the control device controls deposit/withdrawal and accounting for the credit function via the wireless communicating means.

19. The communication system according to claim 12, wherein
the storage medium further includes in the same shape a memory card function and a memory card terminal for access to the memory card function, and
the cellular phone is allowed to control the memory card function via the contact connecting means and the control device is allowed to control the memory card function via the wireless communicating means.

20. The communication system according to claim 19, wherein
the control device controls transmission/reception of media content to/from the memory card function.

21. The communication system according to claim 19, wherein
the control device controls reception and reproduction of media content recorded in the memory card function.

22. The communication system according to claim 19, wherein
the memory card function has a memory card shape and a memory card terminal that are defined by a standard of any of a Memory Stick, a Secure Digital (SD) card, a MultiMedia Card (MMC), a Compact Flash (registered trademark), and a Universal Serial Bus (USB) memory.

23. The communication system according to claim 19, wherein
the storage medium is configured in accordance with a regulation by GSM (11.11), and
the control device adds an information component that provides an access type to a command/response to the storage medium for differentiation between a command/response for controlling the memory card function and a command/response compatible with ISO/IEC 7816-4.

24. A control device for controlling a storage medium that is loaded in a cellular phone and stores at least subscriber information of the cellular phone, the control device comprising:
wireless communicating means for functioning for connection to the storage medium; and
controlling means for controlling the storage medium via the wireless communicating means.

25. The control device according to claim 24, wherein
the storage medium includes a reflector that transmits data by a reflected wave arising from modulation processing, and
the wireless communicating means is formed of a reflected-wave read unit that transmits an unmodulated carrier and reads out data from a modulated reflected wave from the reflector, and the wireless communicating means carries out data communication by a reflected-wave transmission system.

26. The control device according to claim 24, wherein
the storage medium is formed to have the same card size as a card size defined by ISO/IEC 7816, and carries out data transmission control compatible with ISO/IEC 7816-3 with the cellular phone via an IC card interface, and
the wireless communicating means transmits a command/response APDU defined by ISO/IEC 7816-4 to the storage medium.

27. The control device according to claim 26, wherein
a transfer protocol system (T = 0, T = 1) and a clock rate conversion factor (F, D) that are defined by ISO/IEC 7816-3 are set in the storage medium, and at the time of access to the storage medium, the wireless communicating means recognizes the set transfer protocol system and the set clock rate conversion factor, and carries out command/response control in accordance with the transfer protocol system and the clock rate conversion factor.

28. The control device according to claim 24, wherein
the storage medium further stores service information relating to service provision, and
the control device controls the service information via the wireless communicating means.

29. The control device according to claim 28, wherein
the service information includes at least one of electronic money and a credit card, and
the control device controls deposit/withdrawal and accounting for the credit function via the wireless communicating means.

30. The control device according to claim 24, wherein
the storage medium further includes a memory card function in the same shape, and
the control device controls the memory card function via the wireless communicating means.

31. The control device according to claim 30, wherein
the control device controls transmission/reception of media content to/from the memory card function via the wireless communicating means.

32. The control device according to claim 30, wherein
the control device controls reception and reproduction of media content recorded in the memory card function via the wireless communicating means.

33. The control device according to claim 30, wherein
the storage medium is configured in accordance with a regulation by GSM (11.11) and ISO/IEC 7816, and
the wireless communicating means adds an information component that provides an access type to a command/response to the storage medium for differentiation between a command/response for controlling the memory card function and a command/response compatible with ISO/IEC 7816-4.
